# EUROPEAN PATENT APPLICATION

(11) **EP 1 699 234 A1**
(43) Date of publication of application: **06.09.2006**
(21) Application number: 04807569.1
(22) Date of filing: 22.12.2004
(51) Int. Cl.: H04N 5/44, H04B 1/06, H04H 1/00

(54) **TELEVISION BROADCAST RECEPTION DEVICE, TELEVISION BROADCAST RECEPTION METHOD, AND TELEVISION BROADCAST RECEPTION PROGRAM**

(30) Priority: 25.12.2003 JP 2003429440
(71) Applicant: Matsushita Electric Industries Co., Ltd., Kadoma-shi, Osaka 571-8501 (JP)
(72) Inventor: MITSUMATA, Tatsuaki c/o Matushita El. Ind. Co.,Ltd, Chuo-ku, Osaka-shi, Osaka 540-6319 (JP)
(74) Representative: TBK-Patent
(86) International application number: PCT/JP2004/019212
(87) International publication number: WO 2005/064927

(57) **Abstract**

A user can set reproduction of data broadcasting to ON and OFF by operating a remote control. When the reproduction of the data broadcasting is set to OFF, a disabling flag is set to ON. An NVRAM in a television receiver stores a disabling flag indicating whether or not the reproduction of the data broadcasting is disabled, data used at the time of receiving the data broadcasting, and data generated and updated when the data broadcasting is received. A data broadcasting reproduction disabler disables, when the disabling flag stored in the NVRAM is set to ON, the reproduction of the data broadcasting against an instruction to reproduce the data broadcasting from the user.

## Description

### [Technical Field]

The present invention relates to a television broadcasting receiving device capable of receiving data broadcasting, a television broadcasting receiving method, and a television broadcasting receiving program.

### [Background Art]

Conventionally, a video recording device referred to as a blue-ray disc recorder containing a BS (Broadcast Satellite) digital tuner has been proposed (see Nonpatent document 1).
[Nonpatent Document 1] "Sony Sells World's First Blue-ray Disc Recorder on April 10", [online], March 3, 2003, AVWatch [Retrieved on September 28, 2003], Internet <URL:http://www.watch.impress.co.jp/av/docs/20030303/sony.ht m>

### [Disclosure of the Invention]

### [Problems to be Solved by the Invention]

Television broadcasting receiving devices such as television receivers, external tuners, and video recording devices capable of receiving data broadcasting each include a digital tuner, and have an NVRAM (Nonvolatile Random Access Memory) storing data required for data broadcasting. Depending on a program in data broadcasting, data is generated when data broadcasting is reproduced, and the generated data is stored in the NVRAM. The data stored in the NVRAM is updated as the data broadcasting is reproduced. When the same program is then reproduced, the data stored in the NVRAM is used.

For example, it is possible to store a game point acquired in a game program in data broadcasting broadcast every week as data in an NVRAM and to update the point on the basis of the data stored in the NVRAM when the game program is broadcast next week. That is, a user can participate the next week' s game program using the game point acquired in the game program broadcast this week.

In such a case, when data broadcasting is reproduced by different television broadcasting receiving devices that differ for each receiving of the data broadcasting, inconvenience occurs. In the above-mentioned example, when the game program is viewed by a television receiver in the first week and is viewed by a video recording device in the second week, the point stored in the NVRAM in the television receiver when the first week's game program is reproduced cannot be utilized when the second week's game program is reproduced.

Generally, the television broadcasting receiving devices such as the television receivers, the external tuners, and the video recording devices do not have the function of sharing data thereamong. The data in the NVRAM in the television broadcasting receiving device is so adapted that it cannot be copied in order to prevent unauthorized use.

Consequently, the user must always reproduce the same program in the data broadcasting using the same television broadcasting receiving device.

In a case where there are a television receiver and a video recording device in one room, the user may not recognize which of the television receiver and the video recording device is reproducing television broadcasting or data broadcasting in many cases. In such a case, a program in the data broadcasting using the data stored in the NVRAM may, in some cases, be reproduced using different television broadcasting receiving devices. In a case where there exist a plurality of television broadcasting receiving devices, the user may not remember which of the television broadcasting receiving devices has reproduced a certain program in the data broadcasting once in many cases. Consequently, the data broadcasting is reproduced by the television broadcasting receiving device that is not intended by the user. As a result, the previous data cannot be utilized for reproducing the data broadcasting.

### [Means for Solving the Problems]

An object of the present invention is to provide a television broadcasting receiving device in which unintended data is prevented from being utilized when data broadcasting is reproduced, a television broadcasting receiving method, and a television broadcasting receiving program.

A television broadcasting receiving device according to an aspect of the present invention includes a receiver that receives television broadcasting and data broadcasting, a reproducer that reproduces the television broadcasting or the data broadcasting received by the receiver, a storage that stores data generated and updated when the data broadcasting is reproduced, a setter for setting the reproduction of the data broadcasting to permission and inhibition, and a controller that disables, when the reproduction of the data broadcasting is set to inhibition using the setter, the reproduction of the data broadcasting by the reproducer.

In the television broadcasting receiving device, the television broadcasting and the data broadcasting are received by the receiver, and the received television broadcasting or data broadcasting is reproduced by the reproducer. The data generated and updated when the data broadcasting is reproduced is stored in the storage.

A user can set the reproduction of the data broadcasting to permission and inhibition using the setter. When the reproduction of the data broadcasting is set to inhibition using the setter, the controller disables the reproduction of the data broadcasting by the reproducer.

Consequently, the user is prevented from utilizing unintended data when the data broadcasting is reproduced.

The data broadcasting receiving device may include an instruction device that gives an instruction to reproduce the data broadcasting by the reproducer, and a notification unit that notifies, when the reproduction of the data broadcasting is set to inhibition using the setter, a user that the reproduction of the data broadcasting is set to inhibition in response to the instruction to reproduce the data broadcasting using the instruction device.

In this case, when the reproduction of the data broadcasting is set to inhibition, the user is notified that the reproduction of the data broadcasting is set to inhibition in response to the instruction to reproduce the data broadcasting. Consequently, the user can easily recognize that the reproduction of the data broadcasting is set to inhibition.

The notification unit may include a display that indicates that the reproduction of the data broadcasting is set to inhibition.

In this case, the user can easily recognize that the reproduction of the data broadcasting is set to inhibition.

A television broadcasting receiving device according to another aspect of the present invention includes a receiver that receives television broadcasting and data broadcasting, a reproducer that reproduces the television broadcasting or the data broadcasting received by the receiver, an instruction device that gives an instruction to reproduce the data broadcasting by the reproducer, a storage that stores data generated and updated when the data broadcasting is reproduced, and a confirmation unit that makes a user confirm whether or not the data broadcasting is to be reproduced in response to the instruction to reproduce the data broadcasting by the instruction device.

In the television broadcasting receiving device, the television broadcasting and the data broadcasting are received by the receiver, and the received television broadcasting or data broadcasting is reproduced by the reproducer. The data generated and updated when the data broadcasting is reproduced is stored in the storage.

The user can give the instruction to reproduce the data broadcasting using the instruction device. The confirmation unit makes the user confirm whether or not the data broadcasting is to be reproduced in response to the instruction to reproduce the data broadcasting by the instruction device.

Consequently, the user is prevented from utilizing unintended data when the data broadcasting is reproduced.

The television broadcasting receiving device may further include a controller that controls the reproducer such that the data broadcasting is not reproduced when the user gives the instruction not to reproduce the data broadcasting in response to the confirmation by the confirmation unit, while being reproduced when the user gives the instruction to reproduce the data broadcasting in response to the confirmation by the confirmation unit.

In this case, the data broadcasting is not reproduced when the user gives the instruction not to reproduce the data broadcasting, while being reproduced when the user gives the instruction to reproduce the data broadcasting. Thus, the user is reliably prevented from utilizing unintended data when the data broadcasting is reproduced.

The confirmation unit may include a display that displays an inquiry as to whether or not the data broadcasting is to be reproduced in response to the instruction to reproduce the data broadcasting by the instruction device.

In this case, the user can easily confirm whether or not the data broadcasting is to be reproduced by answering the inquiry displayed on the display.

A television broadcasting receiving device that can be connected to another one or a plurality of appliances according to still another aspect of the present invention includes a receiver that receives television broadcasting and data broadcasting, a reproducer that reproduces the television broadcasting or the data broadcasting received by the receiver, a storage that stores data generated and updated when the data broadcasting is reproduced, a setter for setting an appliance for reproducing the data broadcasting, an instruction device that gives an instruction to reproduce the data broadcasting by the reproducer, and a controller that transmits a request to reproduce the data broadcasting to the appliance set using the setter in response to the instruction to reproduce the data broadcasting by the instruction device.

In the television broadcasting receiving device, the television broadcasting and the data broadcasting are received by the receiver, and the received television broadcasting or data broadcasting is reproduced by the reproducer. The data generated and updated when the data broadcasting is reproduced is stored in the storage.

The user can set the appliance for reproducing the data broadcasting using the setter. The request to reproduce the data broadcasting is transmitted to the appliance set in response to the instruction to reproduce the data broadcasting by the instruction device. Thus, the data broadcasting can be reproduced by the appliance set by the user.

Consequently, the user is prevented from utilizing unintended data when the data broadcasting is reproduced.

The controller may instruct, when it receives the request to reproduce the data broadcasting from another appliance, the reproducer to reproduce the data broadcasting.

When the data broadcasting receiving device is set to the appliance for reproducing the data broadcasting, and the user instructs from another appliance to reproduce the data broadcasting, the request to reproduce the data broadcasting is transmitted to the television broadcasting receiving device from the other appliance. In the case, the data broadcasting is reproduced by the reproducer. Consequently, the data broadcasting can be reproduced utilizing the data in the television broadcasting receiving device that is intended by the user.

A television broadcasting receiving device that can be connected to another one or a plurality of appliances according to still another aspect of the present invention includes a receiver that receives television broadcasting and data broadcasting, a reproducer that reproduces the television broadcasting or the data broadcasting received by the receiver, a storage that stores data generated and updated when the data broadcasting is reproduced, a setter for setting an appliance for acquiring data related to the data broadcasting, an instruction device that gives an instruction to reproduce the data broadcasting by the reproducer, and a controller that transmits a request to reproduce the data broadcasting to the appliance set using the setter in response to the instruction to reproduce the data broadcasting by the instruction device.

In the television broadcasting receiving device, the television broadcasting and the data broadcasting are received by the receiver, and the received television broadcasting or data broadcasting is reproduced by the reproducer. The data generated and updated when the data broadcasting is reproduced is stored in the storage.

The user can set the appliance for acquiring the data related to the data broadcasting using the setter. The request to transmit the data related to the data broadcasting is transmitted to the appliance set in response to the instruction to reproduce the data broadcasting by the instruction device. Thus, the data from the appliance set by the user can be received. In this case, the data broadcasting can be reproduced utilizing the data stored in the appliance set by the user.

Consequently, the user is prevented from utilizing unintended data when the data broadcasting is reproduced.

The controller may write, when it receives the data related to the data broadcasting from the other appliance in response to the request to transmit the data, the received data into the storage.

In this case, the data broadcasting can be reproduced utilizing the data received from the other appliance.

The controller may transmit, when it receives the request to transmit the data related to the data broadcasting from the other appliance, the data stored in the storage to the other appliance.

When the data broadcasting receiving device is set to the appliance for acquiring the data related to the data broadcasting, and the user instructs the other appliance to reproduce the data broadcasting, the request to transmit the data is transmitted to the television broadcasting receiving device from the other appliance. In the case, the data stored in the storage is transmitted to the other appliance, and the data broadcasting is reproduced by the other appliance. Consequently, the data broadcasting can be reproduced utilizing the data in the television broadcasting receiving device that is intended by the user.

The controller may set, when it transmits the data stored in the storage to the other appliance in response to the request to transmit the data from the other appliance, the storage to unusability.

In this case, the data stored in the storage is prevented from being used by the plurality of appliances.

The controller may write, when it receives the data from the other appliance after transmitting the data to the other appliance, the received data into the storage, and set the storage to usability.

In this case, the updated data is written into the storage as the data broadcasting is reproduced by the other appliance. Consequently, the latest data related to the data broadcasting can be held.

A television broadcasting receiving device that can be connected to another one or a plurality of appliances according to still another aspect of the present invention includes a receiver that receives television broadcasting and data broadcasting, a reproducer that reproduces the television broadcasting or the data broadcasting received by the receiver, a storage that stores data generated and updated when the data broadcasting is reproduced, an instruction device that gives an instruction to reproduce the data broadcasting by the reproducer, and a presentation unit that presents to a user information related to the storage and information related to storages in the other one or plurality of appliances in response to the instruction to reproduce the data broadcasting by the instruction device.

In the television broadcasting receiving device, the television broadcasting and the data broadcasting are received by the receiver, and the received television broadcasting or data broadcasting is reproduced by the reproducer. The data generated and updated when the data broadcasting is reproduced is stored in the storage.

The user can give the instruction to reproduce the data broadcasting using the instruction device. The information related to the storage and the information related to the storages in the other one or plurality of appliances are presented to the user in response to the instruction to reproduce the data broadcasting by the instruction device.

Consequently, the user is prevented from utilizing unintended data when the data broadcasting is reproduced.

The storage may have one or a plurality of storage areas, and the storage in each of the other one or plurality of appliances may have one or a plurality of storage areas, the television broadcasting receiving device may further include an operation unit that respectively assigns users to the one or plurality of storage areas in the storage and the one or plurality of storage areas in each of the other one or plurality of appliances, and the presentation unit may present information related to the users respectively assigned to the one or plurality of storage areas in the storage and the one or plurality of storage areas in each of the other one or plurality of appliances.

In this case, the users can be respectively assigned to the one or plurality of storage areas in the storage and the one or plurality of storage areas in each of the other one or plurality of appliances using the operation unit. The information related to the user assigned to each of the storage areas is presented to the user.

Consequently, each of the users is prevented from using the data in the storage area assigned to the other user.

The television broadcasting receiving device may further include a selector that selects any one of the one or plurality of storage areas and the one or plurality of storage areas in each of the other one or plurality of appliances on the basis of the information related to the users presented by the presentation unit, and a controller that transmits, when the selector selects the storage area in the other appliance, a request to transmit the data related to the data broadcasting to the selected other appliance.

In this case, the user can select any one of the storage areas on the basis of the information related to the users presented by the presentation unit. In a case where the storage area in the other appliance is selected, the request to transmit the data related to the data broadcasting is transmitted to the selected other appliance. Thus, the data broadcasting can be reproduced utilizing the data in the storage area that is intended by the user.

The controller may write, when it receives the data related to the data broadcasting from the other appliance in response to the request to transmit the data, the received data into the storage.

In this case, the data broadcasting can be reproduced utilizing the data received from the other appliance.

The controller may transmit, when it receives the request to transmit the data related to the data broadcasting from the other appliance, the data in the selected storage area in the storage to the other appliance.

In a case where the user selects the storage area in the storage in the television broadcasting receiving device by the other appliance, the request to transmit the data is transmitted to the television broadcasting receiving device from the other appliance. In the case, the data stored in the selected storage area in the storage is transmitted to the other appliance, and the data broadcasting is reproduced by the other appliance. Consequently, the data broadcasting can be reproduced utilizing the data in the television broadcasting receiving device that is intended by the user.

The controller may set, when it transmits the data in the selected storage area in the storage to the other appliance in response to the request to transmit the data from the other appliance, the storage area to unusability.

In this case, the data stored in the selected storage area in the storage is prevented from being used by the plurality of appliances.

The controller may write, when it receives the data from the other appliance after transmitting the data to the other appliance, the received data into the selected storage area in the storage, and set the storage area to usability.

In this case, the updated data is written into the selected storage area in the storage as the data broadcasting is reproduced by the other appliance. Consequently, the latest data related to the data broadcasting can be held.

A television broadcasting receiving method according to still another aspect of the present invention includes the steps of receiving television broadcasting and data broadcasting, reproducing the received television broadcasting or data broadcasting, storing data generated and updated when the data broadcasting is reproduced, setting the reproduction of the data broadcasting to permission and inhibition, and disabling the reproduction of the data broadcasting when the reproduction of the data broadcasting is set to inhibition.

In the television broadcasting receiving method, the television broadcasting and the data broadcasting are received, and the received television broadcasting or data broadcasting is reproduced. The data generated and updated when the data broadcasting is reproduced is stored.

The user can set the reproduction of the data broadcasting to permission and inhibition. In a case where the reproduction of the data broadcasting is set to inhibition, the reproduction of the data broadcasting is disabled.

Consequently, the user is prevented from utilizing unintended data when the data broadcasting is reproduced.

A television broadcasting receiving method according to still another aspect of the present invention includes the steps of receiving television broadcasting and data broadcasting, reproducing the received television broadcasting or data broadcasting, giving an instruction to reproduce the data broadcasting, storing data generated and updated when the data broadcasting is reproduced, and making a user confirm whether or not the data broadcasting is to be reproduced in response to the instruction to reproduce the data broadcasting.

In the television broadcasting receiving method, the television broadcasting and the data broadcasting are received, and the received television broadcasting or data broadcasting is reproduced. The data generated and updated when the data broadcasting is reproduced is stored.

The user can give the instruction to reproduce the data broadcasting. The user is made to confirm whether or not the data broadcasting is to be reproduced in response to the instruction to reproduce the data broadcasting.

Consequently, the user is prevented from utilizing unintended data when the data broadcasting is reproduced.

A television broadcasting receiving method according to still another aspect of the present invention includes the steps of receiving television broadcasting and data broadcasting, reproducing the received television broadcasting or data broadcasting, storing data generated and updated when the data broadcasting is reproduced, setting an appliance for reproducing the data broadcasting, giving an instruction to reproduce the data broadcasting, and transmitting a request to reproduce the data broadcasting to the appliance set in response to the instruction to reproduce the data broadcasting.

In the television broadcasting receiving method, the television broadcasting and the data broadcasting are received, and the received television broadcasting or data broadcasting is reproduced. The data generated and updated when the data broadcasting is reproduced is stored.

The user can set the appliance for reproducing the data broadcasting. The request to reproduce the data broadcasting is transmitted to the appliance set in response to the instruction to reproduce the data broadcasting. Thus, the data broadcasting can be reproduced by the appliance set by the user.

A television broadcasting receiving method according to still another aspect of the present invention includes the steps of receiving television broadcasting and data broadcasting, reproducing the received television broadcasting or data broadcasting, storing data generated and updated when the data broadcasting is reproduced, setting an appliance for acquiring data related to the data broadcasting, giving an instruction to reproduce the data broadcasting, and transmitting a request to transmit the data related to the data broadcasting to the appliance set in response to the instruction to reproduce the data broadcasting.

In the television broadcasting receiving method, the television broadcasting and the data broadcasting are received, and the received television broadcasting or data broadcasting is reproduced. The data generated and updated when the data broadcasting is reproduced is stored.

The user can set the appliance for acquiring the data related to the data broadcasting. The request to transmit the data related to the data broadcasting is transmitted to the appliance set in response to the instruction to reproduce the data broadcasting. Thus, the data from the appliance set by the user can be received. In this case, the data broadcasting can be reproduced utilizing the data stored in the appliance set by the user.

Consequently, the user is prevented from utilizing unintended data when the data broadcasting is reproduced.

A television broadcasting receiving method according to still another aspect of the present invention includes the steps of receiving television broadcasting and data broadcasting, reproducing the received television broadcasting or data broadcasting, storing in a storage data generated and updated when the data broadcasting is reproduced, giving an instruction to reproduce the data broadcasting, and presenting to a user information related to the storage and information related to storages in the other one or plurality of appliances in response to the instruction to reproduce the data broadcasting.

In the television broadcasting receiving method, the television broadcasting and the data broadcasting are received, and the received television broadcasting or data broadcasting is reproduced. The data generated and updated when the data broadcasting is reproduced is stored in the storage.

The user can give the instruction to reproduce the data broadcasting. The information related to the storage and the information related to the storages in the other one or plurality of appliances are presented to the user in response to the instruction to reproduce the data broadcasting.

Consequently, the user is prevented from utilizing unintended data when the data broadcasting is reproduced.

A television broadcasting receiving program according to still another aspect of the present invention is a television broadcasting receiving program that can be executed by a computer, for causing the computer to perform processing of receiving television broadcasting and data broadcasting, reproducing the received television broadcasting or data broadcasting, storing data generated and updated when the data broadcasting is reproduced, setting the reproduction of the data broadcasting to permission and inhibition, and disabling, when the reproduction of the data broadcasting is set to inhibition, the reproduction of the data broadcasting.

In the television broadcasting receiving program, the television broadcasting and the data broadcasting are received, and the received television broadcasting or data broadcasting is reproduced. The data generated and updated when the data broadcasting is reproduced is stored.

The user can set the reproduction of the data broadcasting to permission and inhibition. In a case where the reproduction of the data broadcasting is set to inhibition, the reproduction of the data broadcasting is disabled.

Consequently, the user is prevented from utilizing unintended data when the data broadcasting is reproduced.

A television broadcasting receiving program according to still another aspect of the present invention is a television broadcasting receiving program that can be executed by a computer, for causing the computer to perform processing of receiving television broadcasting and data broadcasting, reproducing the received television broadcasting or data broadcasting, giving an instruction to reproduce the data broadcasting, storing data generated and updated when the data broadcasting is reproduced, and making a user confirm whether or not the data broadcasting is to be reproduced in response to the instruction to reproduce the data broadcasting.

In the television broadcasting receiving program, the television broadcasting and the data broadcasting are received, and the received television broadcasting or data broadcasting is reproduced. The data generated and updated when the data broadcasting is reproduced is stored.

The user can give the instruction to reproduce the data broadcasting. The user is made to confirm whether or not the data broadcasting is to be reproduced in response to the instruction to reproduce the data broadcasting.

Consequently, the user is prevented from utilizing unintended data when the data broadcasting is reproduced.

A television broadcasting receiving program according to still another aspect of the present invention is a television broadcasting receiving program that can be executed by a computer, for causing the computer to perform processing of receiving television broadcasting and data broadcasting, reproducing the received television broadcasting or data broadcasting, storing data generated and updated when the data broadcasting is reproduced, setting an appliance for reproducing the data broadcasting, giving an instruction to reproduce the data broadcasting, and transmitting a request to reproduce the data broadcasting to the appliance set in response to the instruction to reproduce the data broadcasting.

In the television broadcasting receiving program, the television broadcasting and the data broadcasting are received, and the received television broadcasting or data broadcasting is reproduced. The data generated and updated when the data broadcasting is reproduced is stored.

The user can set the appliance for reproducing the data broadcasting. The request to reproduce the data broadcasting is transmitted to the appliance set in response to the instruction to reproduce the data broadcasting. Thus, the data broadcasting can be reproduced by the appliance set by the user.

A television broadcasting receiving program according to still another aspect of the present invention is a television broadcasting receiving program that can be executed by a computer, for causing the computer to perform processing of receiving television broadcasting and data broadcasting, reproducing the received television broadcasting or data broadcasting, storing data generated and updated when the data broadcasting is reproduced, setting an appliance for acquiring data related to the data broadcasting, giving an instruction to reproduce the data broadcasting, and transmitting a request to transmit the data related to the data broadcasting to the appliance set in response to the instruction to reproduce the data broadcasting.

In the television broadcasting receiving program, the television broadcasting and the data broadcasting are received, and the received television broadcasting or data broadcasting is reproduced. The data generated and updated when the data broadcasting is reproduced is stored.

The user can set the appliance for acquiring the data related to the data broadcasting. The request to transmit the data related to the data broadcasting is transmitted to the appliance set in response to the instruction to reproduce the data broadcasting. Thus, the data from the appliance set by the user can be received. In this case, the data broadcasting can be reproduced utilizing the data stored in the appliance set by the user.

Consequently, the user is prevented from utilizing unintended data when the data broadcasting is reproduced.

A television broadcasting receiving program according to still another aspect of the present invention is a television broadcasting receiving program that can be executed by a computer, for causing the computer to perform processing of receiving television broadcasting and data broadcasting, reproducing the received television broadcasting or data broadcasting, storing in a storage data generated and updated when the data broadcasting is reproduced, giving an instruction to reproduce the data broadcasting, and presenting to a user information related to the storage and information related to storages in the other one or plurality of appliances in response to the instruction to reproduce the data broadcasting.

In the television broadcasting receiving program, the television broadcasting and the data broadcasting are received, and the received television broadcasting or data broadcasting is reproduced. The data generated and updated when the data broadcasting is reproduced is stored in the storage.

The user can give the instruction to reproduce the data broadcasting. The information related to the storage and the information related to the storages in the other one or plurality of appliances are presented to the user in response to the instruction to reproduce the data broadcasting.

Consequently, the user is prevented from utilizing unintended data when the data broadcasting is reproduced.

### [Effects of the Invention]

According to the present invention, the user is prevented from utilizing unintended data when data broadcasting is reproduced.

### [Brief Description of the Drawings]

[FIG. 1] FIG. 1 is a block diagram showing the configuration of a system using a television broadcasting receiving device according to an embodiment of the present invention.
[FIG. 2] FIG. 2 is a block diagram showing the configuration of a television receiver 100 and a video recording device 200 according to a first embodiment.
[FIG. 3] FIG. 3 is a diagram showing a data broadcasting setting screen.
[FIG. 4] FIG. 4 is a flow chart showing the operation of a data broadcasting reproduction disabler 120 shown in Fig. 2.
[FIG. 5] FIG. 5 is a diagram showing an example of a message displayed on a display 111 in a case where a disabling flag is set to ON.
[FIG. 6] FIG. 6 is a flow chart showing the operation of a data broadcasting reproduction disabler 120.
[FIG. 7] FIG. 7 is a diagram showing an example of a message displayed on a display 111 in a case where a user gives an instruction to reproduce data broadcasting.
[FIG. 8] FIG. 8 is a block diagram showing the configuration of a television receiver 100 and a video recording device 200 according to a third embodiment.
[FIG. 9] FIG. 9 is a diagram showing a data broadcasting setting screen.
[FIG. 10] FIG. 10 is a flow chart showing the operation of a data broadcasting switcher 221 shown in Fig. 8.
[FIG. 11] FIG. 11 is a diagram showing an example of a switching confirmation message.
[FIG. 12] FIG. 12 is a flow chart showing the operation of a CPU 104 in a television receiver 100 shown in Fig. 8.
[FIG. 13] FIG. 13 is a block diagram showing the configuration of a television receiver 100 and a video recording device 200 according to a fourth embodiment.
[FIG. 14] FIG. 14 is a diagram showing a data broadcasting setting screen.
[FIG. 15] FIG. 15 is a flow chart showing the operation of a data transmitter/receiver 222 shown in Fig. 13.
[FIG. 16] FIG. 16 is a flow chart showing the operation of the data transmitter/receiver 222 shown in Fig. 13.
[FIG. 17] FIG. 17 is a flow chart showing the operation of a CPU 104 in the television receiver 100 shown in Fig. 13.
[FIG. 18] FIG. 18 is a diagram showing an example of a user setting screen.
[FIG. 19] FIG. 19 is a flow chart showing the operation of a data transmitter/receiver 222 in the present embodiment.
[FIG. 20] FIG. 20 is a flow chart showing the operation of the data transmitter/receiver 222 in the present embodiment.

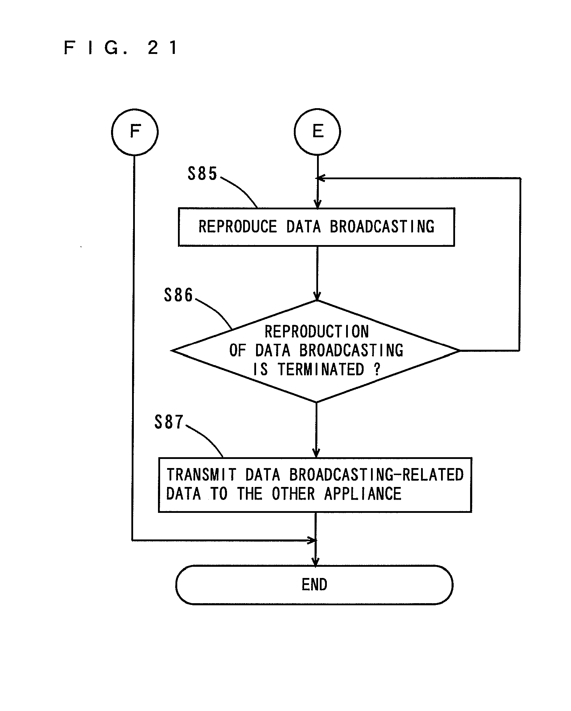

[FIG. 21] FIG. 21 is a diagram showing an example of a list of memory areas.
[FIG. 22] FIG. 22 is a flow chart showing the operation of a CPU 104 in a television receiver 100 in a fifth embodiment.
[FIG. 23] FIG. 23 is a flow chart showing the operation of a data transmitter/receiver 122 in the television receiver 100 in the fifth embodiment.

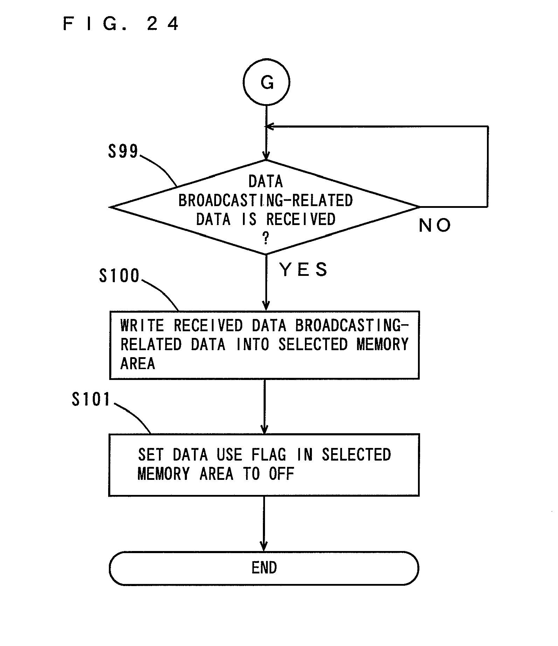

[FIG. 24] FIG. 24 is a sequence diagram showing the schematic flow of an operation for reproducing data broadcasting in the fifth embodiment.
[FIG. 25] FIG. 25 is a diagram showing an example of a user specifying message displayed on a display 111 in a television receiver 100.
[FIG. 26] FIG. 26 is a diagram showing an example of the user specifying message in the fifth embodiment.

### [Best Mode for Carrying out the Invention]

### (1) System Configuration

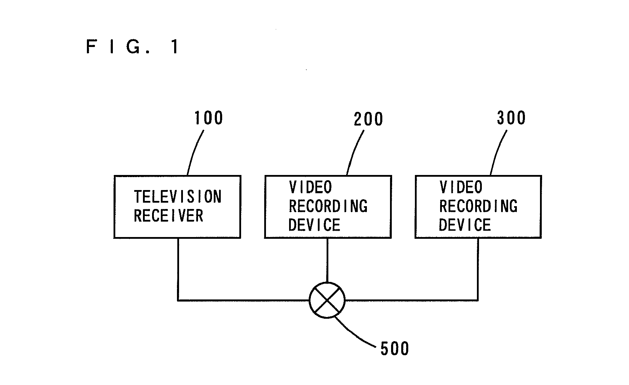

Fig. 1 is a block diagram showing the configuration of a system using a television broadcasting receiving device according to an embodiment of the present invention.

In Fig. 1, a television receiver 100, a video recording device 200, and a video recording device 300 are connected to one another through a network 500. In the present embodiment, each of the television receiver 100, the video recording device 200, and the video recording device 300 corresponds to a television broadcasting receiving device having the function of receiving normal television broadcasting and data broadcasting.

In a case where each of the television receiver 100, the video recording device 200, and the video recording device 300 is not specified, it is merely referred to as an appliance.

### (2) First Embodiment

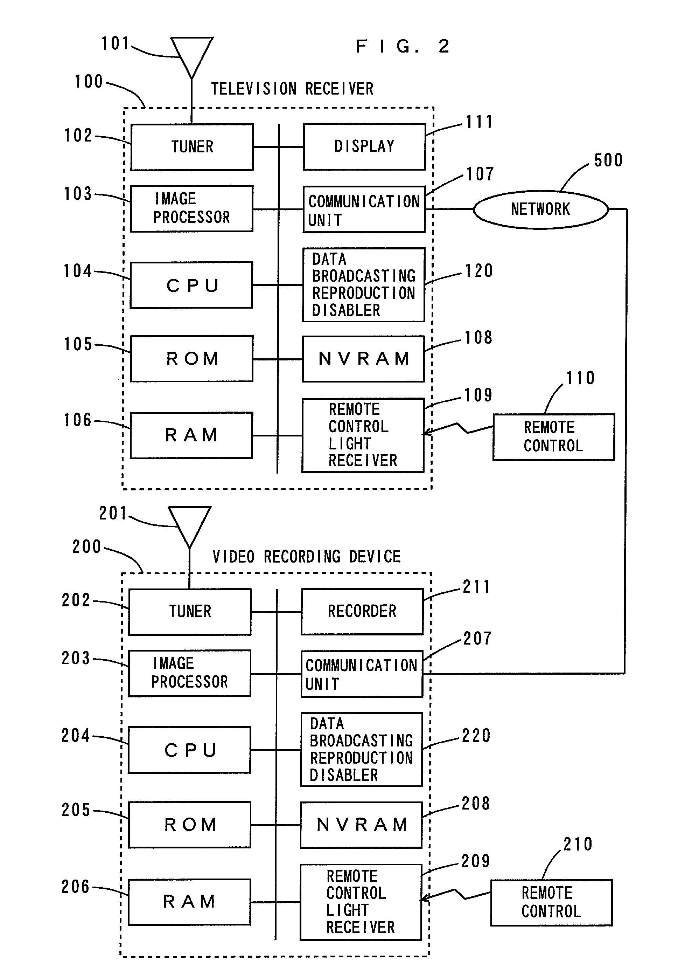

Fig. 2 is a block diagram showing the configuration of a television receiver 100 and a video recording device 200 according to a first embodiment.

The television receiver 100 includes an antenna 101, a tuner 102, an image processor 103, a CPU (Central Processing Unit) 104, a ROM (Read-Only Memory) 105, a RAM (Random Access Memory) 106, a communication unit 107, an NVRAM (Nonvolatile RandomAccess Memory) 108, a remote control light receiver 109, and a display 111. The television receiver 100 includes a data broadcasting reproduction disabler 120. Although the data broadcasting reproduction disabler 120 is realized by the CPU 104 and a television broadcasting receiving program, the data broadcasting reproduction disabler 120 is herein indicated by a block separate from the CPU 104 in order to make understanding easy.

The data broadcasting reproduction disabler 120 may be realized by hardware such as an electronic circuit separate from the CPU 104.

The tuner 102 is connected to the antenna 101 through an antenna cable to receive a signal in normal television broadcasting (hereinafter referred to as a television broadcasting signal) and a signal in data broadcasting (hereinafter referred to as a data broadcasting signal) through the antenna 101, and carry out tuning of the received television broadcasting signal and data broadcasting signal.

The image processor 103 converts the television broadcasting signal or the data broadcasting signal that has been tuned in by the tuner 102 into a video signal. The display 111 displays a video on the basis of the video signal fed from the image processor 103.

The ROM 105 stores the television broadcasting receiving program and various types of data. The CPU 104 executes on the RAM 106 the television broadcasting receiving program stored in the ROM 105.

The communication unit 107 is connected to a network 500 through a communication cable, and communicates with other appliances. In the present embodiment, the communication unit 107 communicates with the video recording device 200 and the video recording device 300.

The NVRAM 108 stores information required to receive the television broadcasting signal and the data broadcasting signal. The NVRAM 108 stores a disabling flag indicating whether or not the reproduction of the data broadcasting is disabled. The disabling flag is previously set by an operation performed by a user. Further, the NVRAM 108 stores data used when the data broadcasting is received and data generated and updated when the data broadcasting is received.

The data used when the data broadcasting is received and the data generated and updated when the data broadcasting is received are referred to as data broadcasting-related data.

The data broadcasting reproduction disabler 120 disables, when the disabling flag stored in the NVRAM 108 is set to ON, the reproduction of the data broadcasting against an instruction to reproduce the data broadcasting from the user.

A remote control 110 has various types of switches such as a television broadcasting button for giving an instruction to receive the television broadcasting,a data broadcasting button for giving an instruction to receive the data broadcasting, and a channel button for selecting a channel. When the user operates the remote control 110 so that a light signal from the remote control 110 is received by the remote control light receiver 109, the light signal is converted into an electric signal, and the electric signal is fed to the CPU 104.

The video recording device 200 includes an antenna 201, a tuner 202, an image processor 203, a CPU 204, a ROM 205, a RAM 206, a communication unit 207, an NVRAM 208, a remote control light receiver 209, and a recorder 211. The video recording device 200 includes a data broadcasting reproduction disabler 220. The data broadcasting reproduction disabler 220 is realized by the CPU 204 and a television broadcasting receiving program.

The data broadcasting reproduction disabler 220 may be realized by hardware such as an electronic circuit separate from the CPU 204.

The operations of the tuner 202, the image processor 203, the CPU 204, the ROM 205, the RAM 206, the communication unit 207, the NVRAM 208, the remote control light receiver 209, a remote control 210, and the data broadcasting reproduction disabler 220 are respectively the same as the operations of the antenna 101, the tuner 102, the image processor 103, the CPU 104, the ROM 105, the RAM 106, the communication unit 107, the NVRAM 108, the remote control light receiver 109, the remote control 110, and the data broadcasting reproduction disabler 120. The recorder 211 records a video signal fed from the image processor 203.

The configuration and the operation of the video recording device 300 are respectively the same as the configuration and the operation of the video recording device 200. Respective video signals from the video recording device 200 and the video recording device 300 are transmitted to the television receiver 100 through the communication unit 207 and the network 500, and are displayed on the display 111.

Although in the present embodiment, each of the television receiver 100, the video recording device 200, and the video recording device 300 includes the data broadcasting reproduction disabler 120 or 220, one or two of the television receiver 100, the video recording device 200, and the video recording device 300 may include the data broadcasting reproduction disabler 120 or 220.

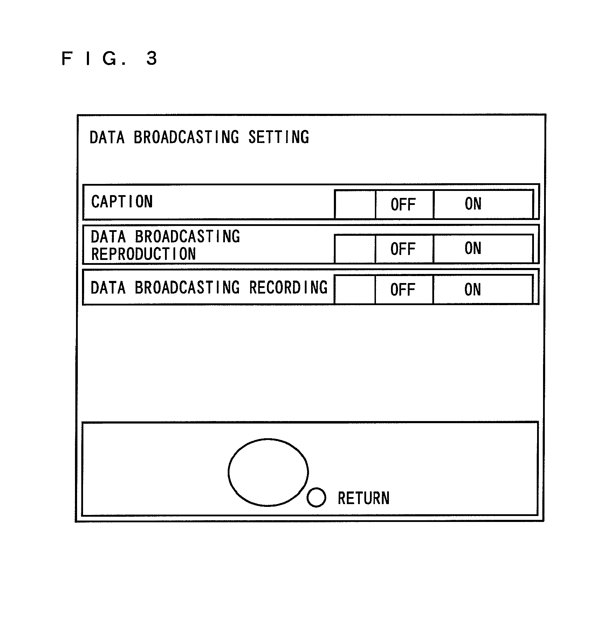

Fig. 3 is a diagram showing a data broadcasting setting screen in the first embodiment. The data broadcasting setting screen shown in Fig. 3 is displayed on the display 111 by the user operating the remote control 110.

In the present embodiment, the user can set the reproduction of the data broadcasting by the television receiver 100 to ON and OFF on the data broadcasting setting screen by operating the remote control 110. When the reproduction of the data broadcasting is set to ON, the disabling flag stored in the NVRAM 108 is set to OFF. In this case, it is possible to reproduce the data broadcasting by the television receiver 100. When the reproduction of the data broadcasting is set to OFF, the disabling flag stored in the NVRAM 108 is set to ON. In this case, it is possible to disable the reproduction of the data broadcasting by the television receiver 100.

Similarly, the user can set the reproduction of the data broadcasting by the video recording devices 200 and 300 to ON and OFF on the data broadcasting setting screen by operating the remote control 210. Thus, the disabling flag stored in the NVRAM 208 is set to ON or OFF.

In the following, description is made of a case where the user operates the remote control 110 in the television receiver 100.

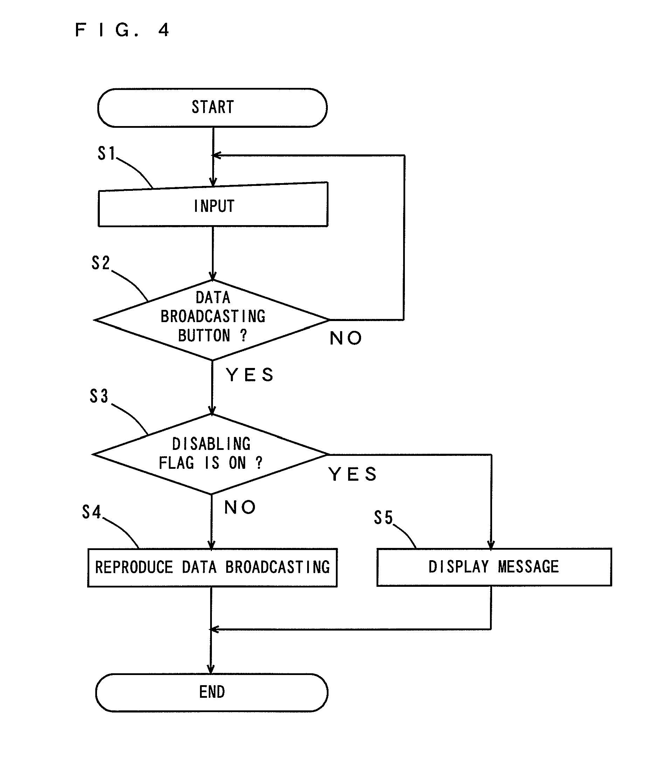

Fig. 4 is a flow chart showing the operation of the data broadcasting reproduction disabler 120 in the television receiver 100 in the first embodiment.

A signal representing the operation of the remote control 110 is inputted to the CPU 104 through the remote control light receiver 109 (step S1). The data broadcasting reproduction disabler 120 determines whether or not a data broadcasting button is pressed on the basis of the inputted signal (step S2). In a case where the data broadcasting button is not pressed, the procedure is returned to the step S1.

In a case where the data broadcasting button is pressed, the data broadcasting reproduction disabler 120 determines whether or not the disabling flag stored in the NVRAM 108 is set to ON (step S3).

In a case where the disabling flag is not set to ON, the data broadcasting reproduction disabler 120 instructs the tuner 102 and the image processor 103 to reproduce the data broadcasting (step S4). In this case, the tuner 102 and the image processor 103 reproduce the data broadcasting using the data broadcasting-related data in the NVRAM 108, to display the data broadcasting on the display 111. Thus, the data broadcasting-related data in the NVRAM 108 is updated.

In a case where the disabling flag is set to ON, the data broadcasting reproduction disabler 120 disables the reproduction of the data broadcasting by the tuner 102 and the image processor 103, and displays a notification message on the display 111 (step S5).

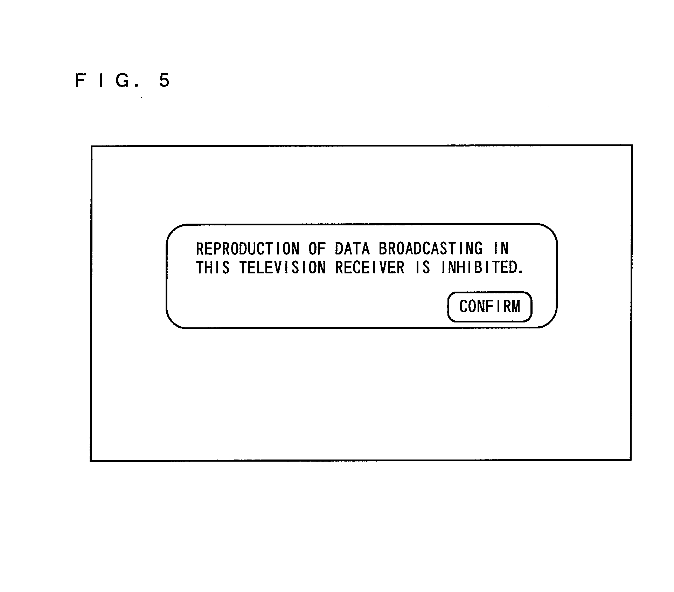

Fig. 5 is a diagram showing an example of the notification message in the first embodiment.

In the example shown in Fig. 5, a notification message indicating that the reproduction of the data broadcasting by the television receiver 100 is inhibited is displayed on the display 111. Thus, the user can recognize that the data broadcasting cannot be reproduced by the television receiver 100. In this case, a confirmation button is selected by operating the remote control 110 so that the notification message on a screen can be erased, and the screen can be returned to a screen of normal television broadcasting.

The operation of the data broadcasting reproduction disabler 220 in each of the video recording devices 200 and 300 is the same as the operation of the data broadcasting reproduction disabler 120 in the television receiver 100.

The user can reproduce the data broadcasting using desired one of appliances, i.e., the television receiver 100, the video recording device 200, and the video recording device 300 by previously setting the respective disabling flags in the television receiver 100, the video recording device 200, and the video recording device 300 to ON or OFF on the data broadcasting setting screen shown in Fig. 3.

In this case, when the user attempts to reproduce the data broadcasting using the appliance in which the disabling flag is set to ON, the notification message shown in Fig. 5 is displayed. Consequently, the data broadcasting is prevented from being reproduced using an appliance that is not intended by the user.

Although in the present embodiment, the notification message is erased by the confirmation button on the screen, the notification message may be erased by the respective arbitrary operations of the remote controls 110 and 210, or the notification message may be erased after an elapse of a predetermined time period. In a case where the disabling flag is set to ON, the data broadcasting reproduction disablers 120 and 220 may control the image processors 103 and 203 such that nothing is displayed on the screen in place of display of the notification message on the screen.

### (3) Second Embodiment

A second embodiment of the present invention will be then described. A television receiver 100 and video recording devices 200 and 300 in the second embodiment differ from the television receiver 100 and the video recording devices 200 and 300 in the first embodiment in the operations of data broadcasting reproduction disablers 120 and 220.

In the present embodiment, in a case where a user operates a remote control 110 to give an instruction to reproduce data broadcasting, the data broadcasting reproduction disabler 120 in the television receiver 100 displays a reproduction confirmation message, described later, on a screen of a display 111. In this case, a reproduction confirmation operation, described later, allows the data broadcasting to be reproduced by the television receiver 100.

The operation of the data broadcasting reproduction disabler 220 in each of the video recording devices 200 and 300 is also the same as the operation of the data broadcasting reproduction disabler 120 in the television receiver 100.

In the following, description is made of a case where the user operates the remote control 110 in the television receiver 100.

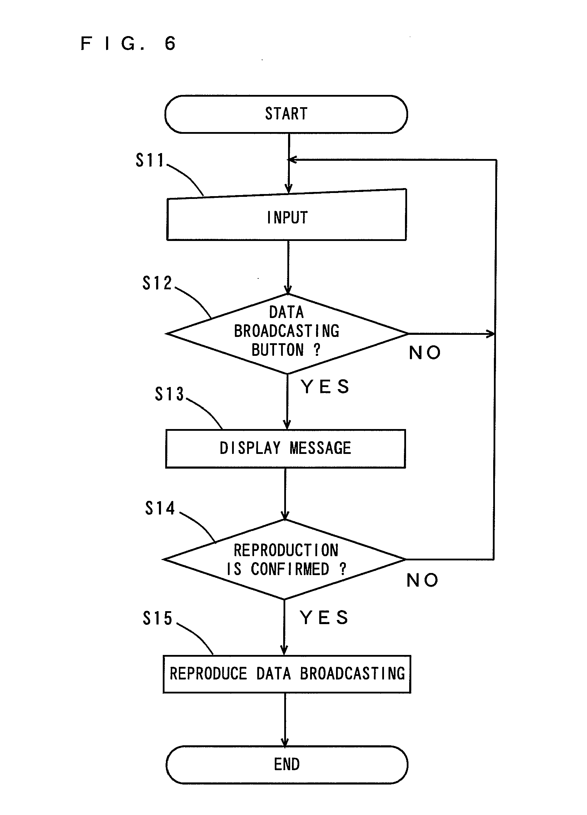

Fig. 6 is a flow chart showing the operation of the data broadcasting reproduction disabler 120 in the television receiver 100 in the second embodiment.

A signal representing the operation of the remote control 110 is inputted to a CPU 104 through a remote control light receiver 109 (step S11). The CPU 104 determines whether or not a data broadcasting button is pressed on the basis of an inputted signal (step S12). In a case where the data broadcasting button is not pressed, the procedure is returned to the step S11.

In a case where the data broadcasting button is pressed, the data broadcasting reproduction disabler 120 displays a reproduction confirmation message on the display 111 (step S13). The data broadcasting reproduction disabler 120 determines whether or not a reproduction confirmation operation is performed by the user using the remote control 110 (step S14).

In a case where the reproduction confirmation operation is performed, the data broadcasting reproduction disabler 120 instructs a tuner 102 and an image processor 103 to reproduce the data broadcasting (step S15). Thus, the tuner 102 and the image processor 103 reproduce the data broadcasting, to display the data broadcasting on the display 111.

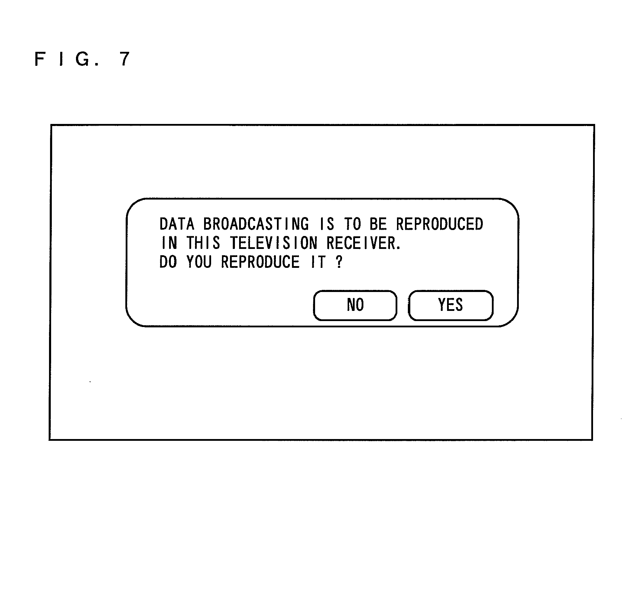

Fig. 7 is a diagram showing an example of the reproduction confirmation message in the second embodiment.

In the example shown in Fig. 7, a reproduction confirmation message for confirming whether or not data broadcasting is to be reproduced by the television receiver 100 is displayed on the display 111. In a case where the user selects "NO" by operating the remote control 110, the data broadcasting reproduction disabler 120 disables the reproduction of the data broadcasting by the tuner 102 and the image processor 103. The user selects "YES" by operating the remote control 110 so that the tuner 102 and the image processor 103 are instructed to reproduce the data broadcasting.

The operation of the data broadcasting reproduction disabler 220 in each of the video recording devices 200 and 300 shown in Fig. 1 is the same as the operation of the data broadcasting reproduction disabler 120 in the television receiver 100.

When the user thus attempts to reproduce the data broadcasting using the television receiver 100 and the video recording devices 200 and 300, the reproduction confirmation message shown in Fig. 7 is displayed. Consequently, the data broadcastingispreventedfrom being reproduced using an appliance that is not intended by the user.

### (4) Third Embodiment

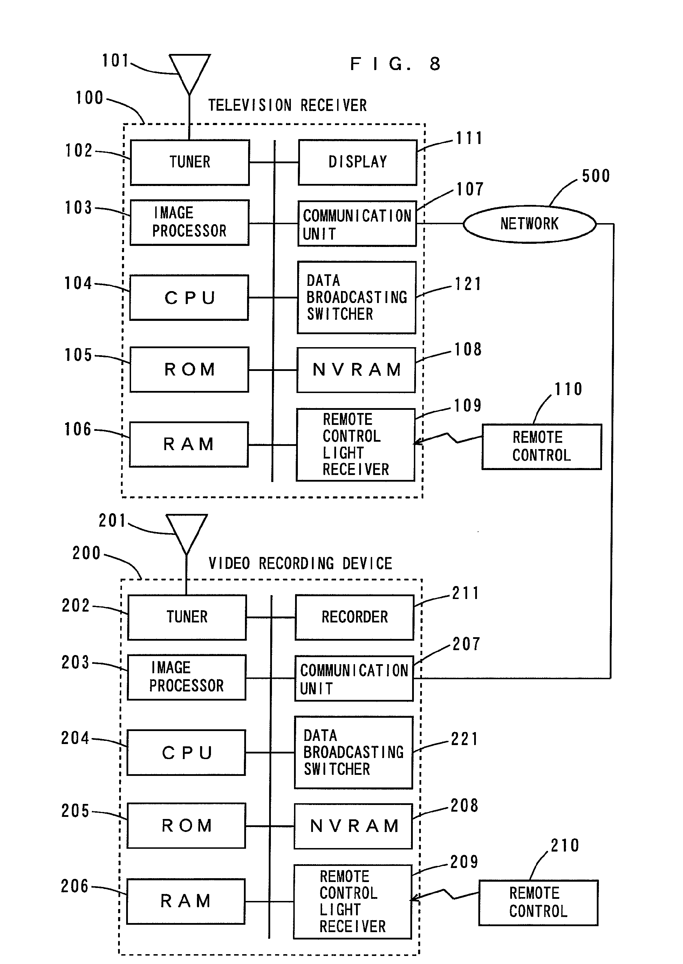

Fig. 8 is a block diagram showing the configuration of a television receiver 100 and a video recording device 200 according to a third embodiment.

The television receiver 100 shown in Fig. 8 differs from the television receiver 100 shown in Fig. 2 in that a data broadcasting switcher 121 is provided in place of the data broadcasting reproduction disabler 120. The data broadcasting switcher 121 is realized by a CPU 104 and a television broadcasting receiving program.

The video recording device 200 shown in Fig. 8 differs from the video recording device 200 shown in Fig. 2 in that a data broadcasting switcher 221 is provided in place of the data broadcasting reproduction disabler 220. The data broadcasting switcher 221 is realized by a CPU 204 and a television broadcasting receiving program.

The data broadcasting switcher 121 in the television receiver 100 transmits, when a data broadcasting reproduction appliance is set to another appliance, a request to reproduce data broadcasting to an appliance set through a communication unit 107 in response to an instruction to reproduce the data broadcasting from a user.

The operation of the data broadcasting switcher 221 in each of the video recording devices 200 and 300 is the same as the operation of the data broadcasting switcher 121 in the television receiver 100.

Although in the present embodiment, each of the television receiver 100, the video recording device 200, and the video recording device 300 includes the data broadcasting switcher 121 or 221, one or two of the television receiver 100, the video recording device 200, and the video recording device 300 may include the data broadcasting reproduction disabler 120 or 220.

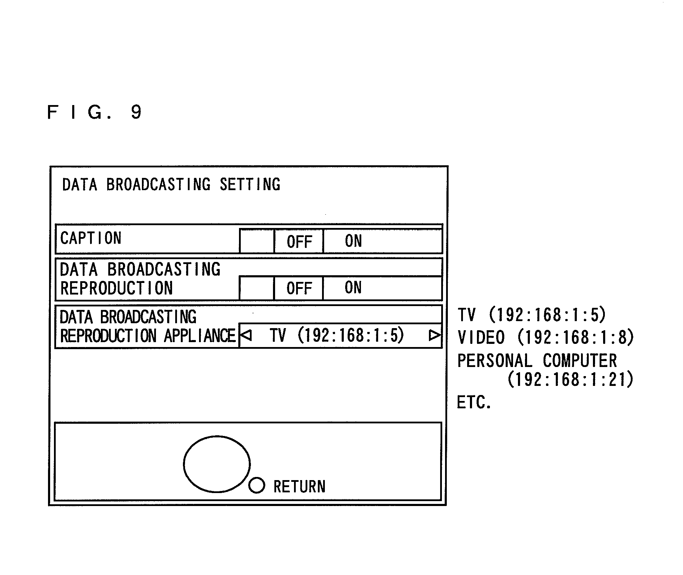

Fig. 9 is a diagram showing a data broadcasting setting screen in the third embodiment. The data broadcasting setting screen shown in Fig. 9 is displayed on a display 111 by the user operating the remote control 110.

In the present embodiment, the user can set the data broadcasting reproduction appliance as an appliance that allows data broadcasting to be reproduced on the data broadcasting setting screen by operating the remote control 110. Here, IP (Internet Protocol) addresses are respectively assigned as identification information to the television receiver 100, the video recording device 200, and the video recording device 300 that are connected to the network 500 shown in Fig. 1. When the user sets the data broadcasting reproduction appliance, the IP address assigned to the set appliance is stored in an NVRAM 108.

In the following, description is made of a case where the user operates a remote control 210 in the video recording device 200. It is assumed that the data broadcasting reproduction appliance is set to the television receiver 100.

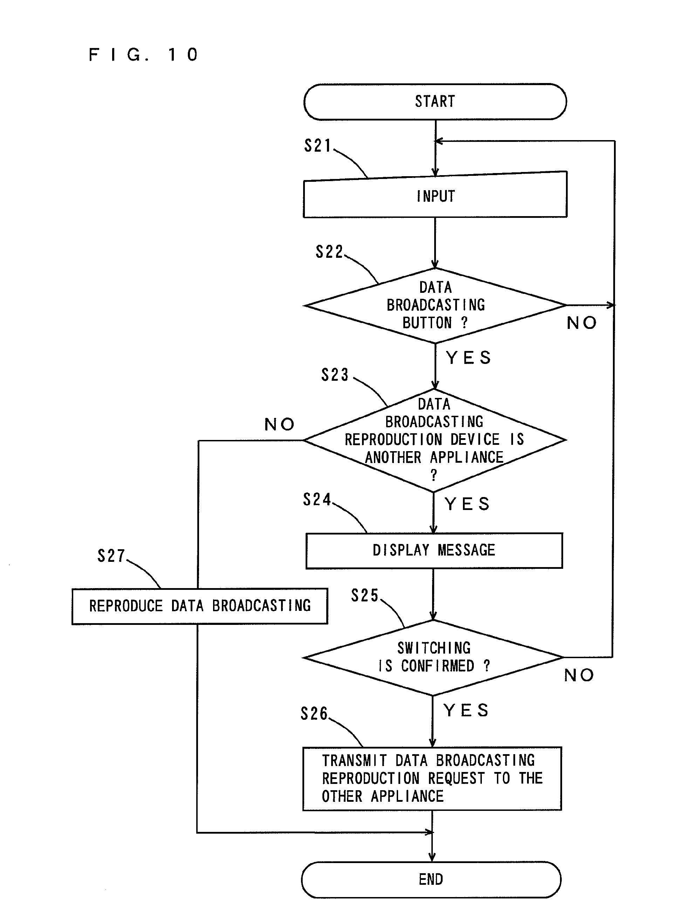

Fig. 10 is a flow chart showing the operation of the data broadcasting switcher 221 in the video recording device 200 in the third embodiment.

A signal representing the operation of the remote control 210 is inputted to a CPU 204 through a remote control light receiver 209 (step S21). The CPU 204 determines whether or not a data broadcasting button is pressed on the basis of an inputted signal (step S22). In a case where the data broadcasting button is not pressed, the procedure is returned to the step S21.

In a case where the data broadcasting button is pressed, the data broadcasting switcher 221 determines whether or not the data broadcasting reproduction appliance is set to another appliance on the basis of an IP address stored in an NVRAM 208 (step S23).

In a case where the data broadcasting reproduction appliance is set to the other appliance, the data broadcasting switcher 221 displays a switching confirmation message on the display 111 in the television receiver 100 (step S24). The data broadcasting switcher 221 determines whether or not a switching confirmation operation is performed by the user using the remote control 210 (step S25).

In a case where the switching confirmation operation is performed, a data broadcasting reproduction request is transmitted to the other appliance through a communication unit 207 (step S26). Here, the data broadcasting reproduction request includes the type of data broadcasting, a channel in data broadcasting, and a signal representing an instruction to start data broadcasting. Thus, the data broadcasting is reproduced by the other appliance, and the data broadcasting is displayed on the display 111 in the television receiver 100. In the example shown in Fig. 9, the data broadcasting is reproduced by the television receiver 100. Thus, data broadcasting-related data stored in the NVRAM 108 in the television receiver 100 is updated.

In a case where the data broadcasting reproduction appliance is set to the appliance (the video recording device 200) in the step S23, the data broadcasting switcher 221 instructs a tuner 202 and an image processor 203 to reproduce the data broadcasting (step S27). Thus, the tuner 202 and the image processor 203 reproduce the data broadcasting, to display the data broadcasting on the display 111.

In a case where the data broadcasting button is not pressed in the step S22 or a case where the switching confirmation is not performed in the step S25, the procedure is returned to the step S21.

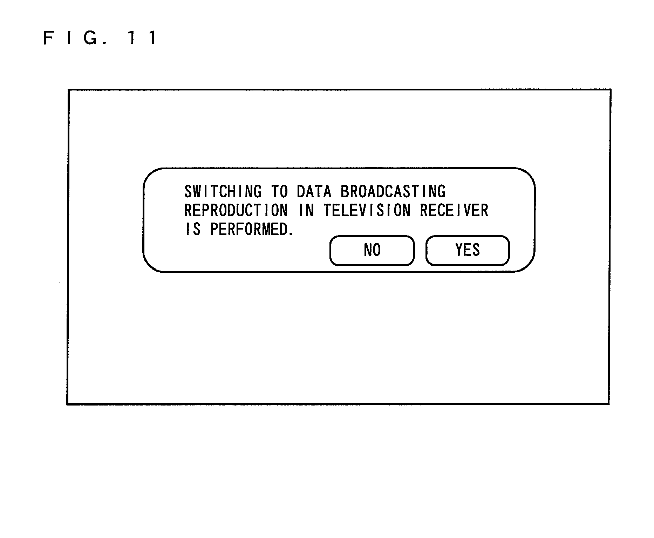

Fig. 11 is a diagram showing an example of the switching confirmation message in the third embodiment.

In the example shown in Fig. 11, in a case where an instruction to reproduce data broadcasting is given by the remote control 210 in the video recording device 200, a switching confirmation message for confirming whether or not switching to the reproduction of the data broadcasting in the television receiver is performed. In a case where the user selects "YES" by operating the remote control 210, the data broadcasting switcher 221 transmits a request to reproduce the data broadcasting to the television receiver 100. In a case where the user selects "NO" by operating the remote control 210, the data broadcasting is not reproduced.

The operation of the data broadcasting switcher 121 in the television receiver 100 shown in Fig. 8 is the same as the operation of the data broadcasting switcher 221 in the video recording device 200.

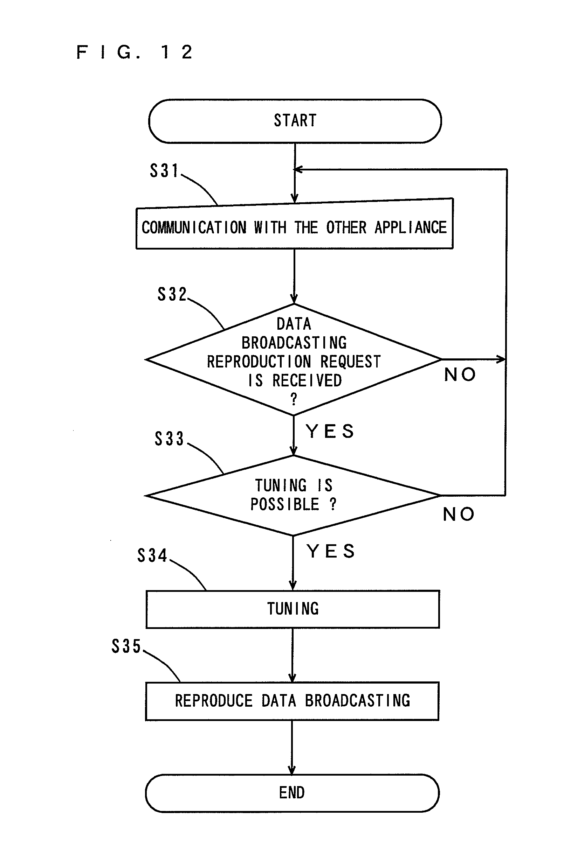

Fig. 12 is a flow chart showing the operation of the data broadcasting switcher 121 in the television receiver 100 in the third embodiment. Here, it is assumed that the data broadcasting reproduction appliance is set to the television receiver 100.

The data broadcasting switcher 121 communicates with the other appliance through the communication unit 107 (step S31), and determines whether or not the data broadcasting reproduction request is received from the other appliance (step S32).

In a case where the data broadcasting reproduction request is received from the other appliance, the data broadcasting switcher 121 determines whether or not tuning is possible by the tuner 102 (step S33). In this example, the data broadcasting reproduction request is received from the video recording device 200.

In a case where tuning is possible, the data broadcasting switcher 121 performs tuning using the tuner 102 on the basis of the type of data broadcasting and the channel in the data broadcasting that are included in the data broadcasting reproduction request (step S34). The data broadcasting switcher 121 instructs the tuner 102 and the image processor 103 to reproduce the data broadcasting (step S35). Thus, the tuner 102 and the image processor 103 reproduce the data broadcasting, to display the data broadcasting on the display 111. The data broadcasting-related data stored in the NVRAM 108 is updated as the data broadcasting is reproduced.

In a case where the data broadcasting reproduction request is not received in the step S32 or a case where tuning is not possible in the step S33, the procedure is returned to the step S31.

When the user attempts to reproduce the data broadcasting using an appliance other than the appliance set as the data broadcasting reproduction appliance, the switching confirmation message shown in Fig. 11 is displayed, and the data broadcasting is reproduced using the appliance set as the data broadcasting reproduction appliance after switching confirmation. Consequently, the data broadcasting is prevented from being reproduced using an appliance that is not intended by the user.

Although in the present embodiment, the switching confirmation message is erased after the switching confirmation on the screen, the switching confirmation message may be erased by an arbitrary operation of each of the remote controls 110 and 210, or the switching confirmation message may be erased after an elapse of a predetermined time period. The data broadcasting switchers 121 and 221 may control, when the data broadcasting reproduction appliance is set to the other appliance, the image processors 103 and 203 such that nothing is displayed on the screen in place of the display of the switching confirmation message on the screen.

### (5) Fourth Embodiment

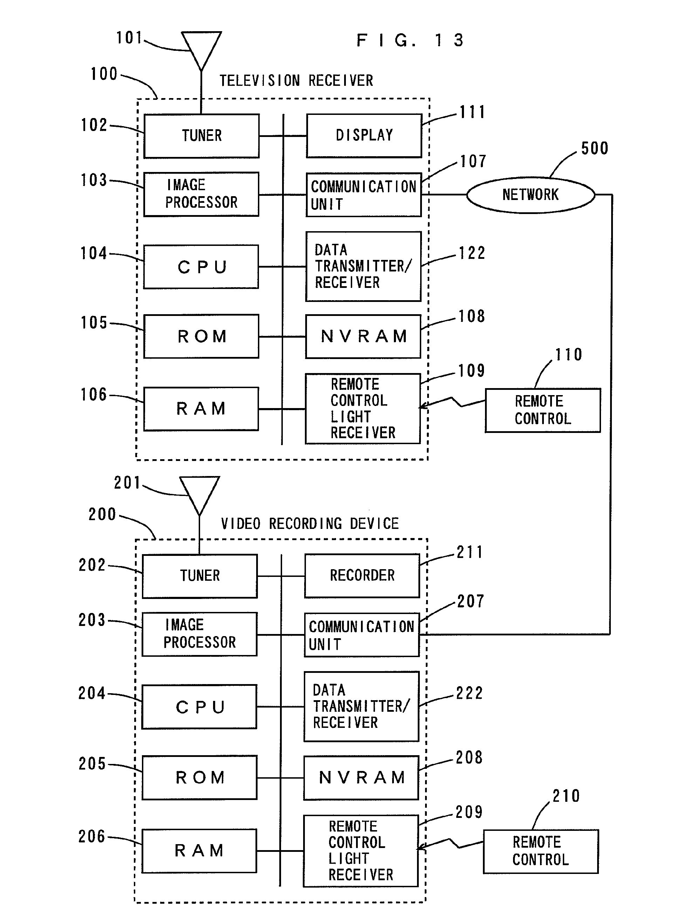

Fig. 13 is a block diagram showing the configuration of a television receiver 100 and a video recording device 200 according to a fourth embodiment.

The television receiver 100 shown in Fig. 13 differs from the television receiver 100 shown in Fig. 2 in that a data transmitter/receiver 122 is provided in place of the data broadcasting reproduction disabler 120. The data transmitter/receiver 122 is realized by a data broadcasting switcher 121 and a television broadcasting receiving program.

The video recording device 200 shown in Fig. 13 differs from the video recording device 200 shown in Fig. 2 in that a data transmitter/receiver 222 is provided in place of the data broadcasting reproduction disabler 220. The data broadcasting switcher 221 is realized by a CPU 204 and a television broadcasting receiving program.

The data transmitter/receiver 122 in the television receiver 100 acquires, when a data acquisition appliance, described later, is set to another appliance, data broadcasting-related data from an appliance set in response to a data broadcasting reproduction instruction from a user. A data use flag is set in an NVRAM 108. The data use flag is set to ON when the NVRAM 108 is used for reproducing data broadcasting.

The operation of the data transmitter/receiver 222 in each of the video recording devices 200 and 300 is the same as the operation of the data transmitter/receiver 122 in the television receiver 100.

Although in the present embodiment, each of the television receiver 100, the video recording device 200, and the video recording device 300 includes a data transmitter/receiver 122 or 222, one or two of the television receiver 100, the video recording device 200, and the video recording device 300 may include the data transmitter/receiver 122 or 222.

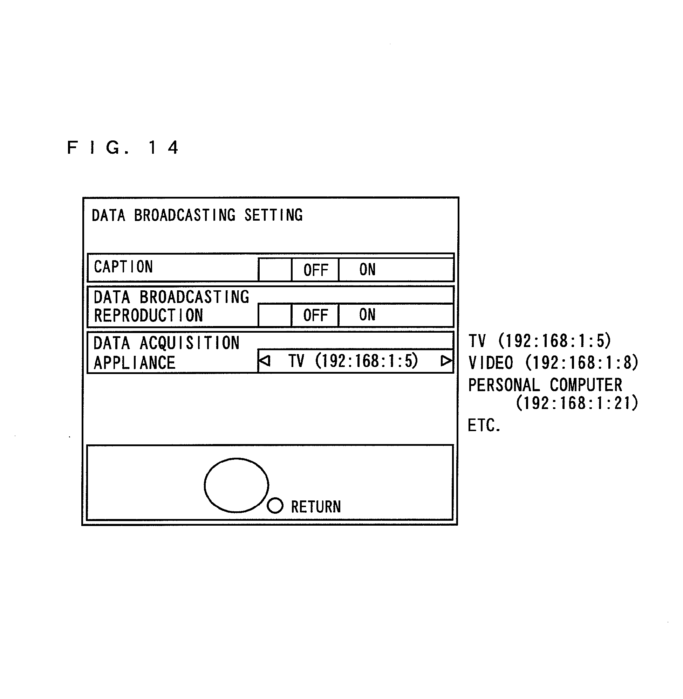

Fig. 14 is a diagram showing a data broadcasting setting screen in the fourth embodiment. The data broadcasting setting screen shown in Fig. 14 is displayed on a display 111 by the user operating the remote controls 110 and 210.

In the present embodiment, the user can set an appliance for acquiring data broadcasting-related data as a data acquisition appliance on the data broadcasting setting screen by operating the remote controls 110 and 210.

Here, IP addresses are respectively assigned as identification information to the television receiver 100, the video recording device 200, and the video recording device 300 that are connected to the network 500 shown in Fig. 1. When the user sets the data acquisition appliance, the IP address assigned to the set appliance is stored in NVRAMs 108 and 208. In the example shown in Fig. 14, the data receiver 100 is set as the data acquisition appliance. Further, the NVRAMs 108 and 208 store the data use flag.

In the following, description is made of a case where the user operates the remote control 210 in the video recording device 200. It is assumed that the data acquisition appliance is set to the television receiver 100.

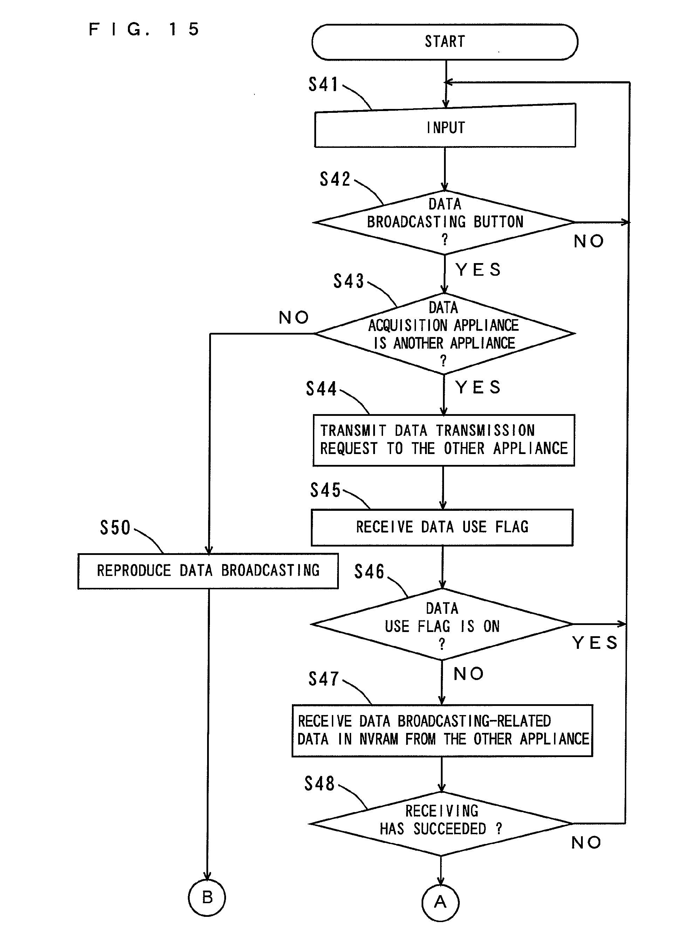

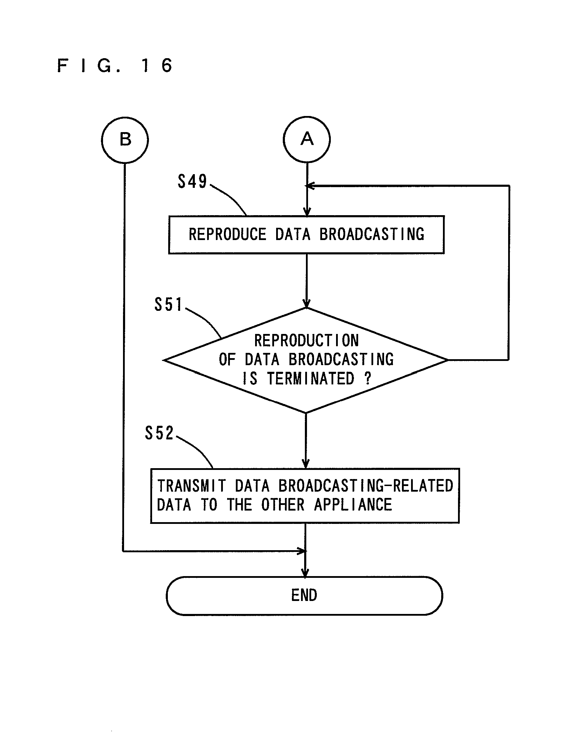

Figs. 15 and 16 are flow charts showing the operation of the data transmitter/receiver 222 in the fourth embodiment.

A signal representing the operation of the remote control 210 is inputted to the CPU 204 through a remote control light receiver 209 (step S41). The CPU 204 determines whether or not a data broadcasting button is pressed on the basis of the inputted signal (step S42).

In a case where the data broadcasting button is pressed, the data transmitter/receiver 222 determines whether or not the data acquisition appliance is set to another appliance on the basis of the IP address stored in the NVRAM 208 (step S43).

In a case where the data acquisition appliance is set to the other appliance, the data transmitter/receiver 222 transmits a data transmission request to the other appliance through a communication unit 207 (step S44). In this example, the data transmitter/receiver 222 transmits a data transmission request to the television receiver 100.

Thereafter, the data transmitter/receiver 222 receives a data use flag from the other appliance through the communication unit 207 (step S45). In this example, the data transmitter/receiver 222 receives a data use flag from the television receiver 100.

Furthermore, the data transmitter/receiver 222 determines whether or not the data use flag is ON (step S46). In a case where the data use flag is OFF, the data transmitter/receiver 222 receives data broadcasting-related data from the other appliance through the communication unit 207 (step S47). In this example, the data transmitter/receiver 222 receives the data broadcasting-related data stored in the NVRAM 108 in the television receiver 100.

The data transmitter/receiver 222 determines whether or not the receiving of the data broadcasting-related data has succeeded (step S48). In a case where the receiving of the data broadcasting-related data has succeeded, the data transmitter/receiver 222 stores the received data broadcasting-related data in the NVRAM 208, and instructs a tuner 202 and an image processor 203 to reproduce the data broadcasting (step S49). Thus, the tuner 202 and the image processor 203 reproduce the data broadcasting on the basis of the data broadcasting-related data in the NVRAM 208, to display the data broadcasting on the display 111. In this case, the data broadcasting-related data stored in the NVRAM 208 is updated as the data broadcasting is reproduced.

Thereafter, the data transmitter/receiver 222 determines whether or not the reproduction of the data broadcasting is terminated (step S51). In a case where the reproduction of the data broadcasting is not terminated, the procedure is returned to the step S49.

In a case where the reproduction of the data broadcasting is terminated, the data transmitter/receiver 222 transmits the data broadcasting-related data in the NVRAM 208 that is updated through the communication unit 207 to the other appliance (step S52). In this example, the data transmitter/receiver 222 transmits the updated data broadcasting-related data to the television receiver 100.

In a case where the data acquisition appliance is set to the appliance (the video recording device 200) in the step S43, the data transmitter/receiver 222 instructs the tuner 202 and the image processor 203 to reproduce the data broadcasting (step S50). Thus, the tuner 202 and the image processor 203 reproduce the data broadcasting, to display the data broadcasting on the display 111. In this case, the data broadcasting-related data in the NVRAM 208 is updated as the data broadcasting is reproduced.

In a case where the data broadcasting button is not pressed in the step S42 or a case where the data use flag is ON in the step S46, the procedure is returned to the step S41.

The operation of the data transmitter/receiver 122 in the television receiver 100 shown in Fig. 13 is the same as the operation of the data transmitter/receiver 222 in the video recording device 200.

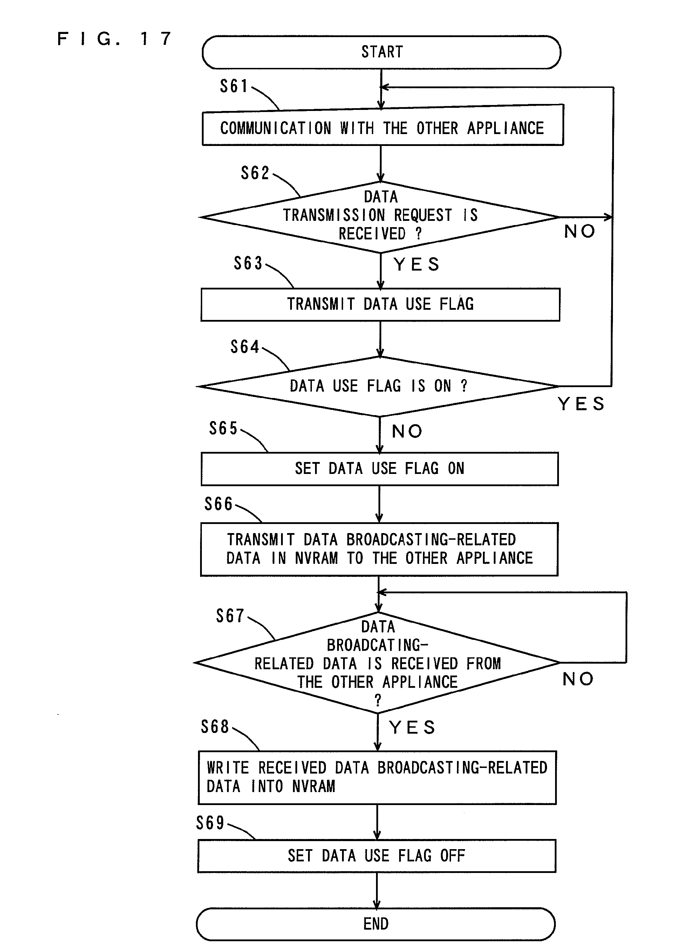

Fig. 17 is a flow chart showing the operation of the data transmitter/receiver 122 in the television receiver 100 in the fourth embodiment.

The data transmitter/receiver 122 communicates with the other appliance through the communication unit 107 (step S61), and determines whether or not a data transmission request is received from the other appliance (step S62). In this example, the data transmitter/receiver 122 receives the data transmission request from the video recording device 200.

In a case where the data transmission request is received from the other appliance, the data transmitter/receiver 122 transmits the data use flag to the other appliance through the communication unit 107 (step S63). In this example, the data transmitter/receiver 122 transmits the data use flag to the video recording device 200.

It is determined whether or not the data use flag is ON (step S64). In a case where the data use flag is OFF, the data use flag is set to ON (step S65).

The data transmitter/receiver 122 then transmits the data broadcasting-related data in the NVRAM 108 to the other appliance through the communication unit 107 (step S66). In this example, the data transmitter/receiver 122 transmits the data broadcasting-related data in the NVRAM 108 to the video recording device 200. Thereafter, the data transmitter/receiver 122 waits until the updated data broadcasting-related data is received from the other appliance through the communication unit 107 (step S67).

The data transmitter/receiver 122 writes, when it receives the updated data broadcasting-related data from the other appliance through the communication unit 107, the received data broadcasting-related data into the NVRAM 108 (step S68). In this example, the data transmitter/receiver 122 receives the updated data broadcasting from the video recording device 200.

Finally, the data transmitter/receiver 122 sets the data use flag to OFF (step S69).

In a case where the data transmission request is not received in the step S62 or a case where the data use flag is ON in the step S64, the procedure is returned to the step S61.

When the user thus attempts to reproduce the data broadcasting using an appliance other than the appliance set as the data acquisition appliance, the data broadcasting-related data is acquired from the appliance set as the data acquisition appliance, and the data broadcasting is reproduced on the basis of the data broadcasting-related data. In this case, the data broadcasting is reproduced, and the data broadcasting-related data is updated, so that the updated data broadcasting-related data is transmitted to the appliance set as the data acquisition appliance after the reproduction of the data broadcasting is terminated. Thus, the data broadcasting is always reproduced using the data broadcasting-related data in the appliance set as the data broadcasting acquisition appliance. Consequently, the data broadcasting is prevented from being reproduced using an appliance that is not intended by the user.

### (6) Fifth Embodiment

An appliance according to a fifth embodiment of the present invention will be then described. The appliance according to the fifth embodiment differs from the appliance according to the fourth embodiment in the operations of data transmitters/receivers 122 and 222.

In the present embodiment, a user can be assigned to each of a plurality of memory areas in an NVRAM 108 or 208 in a television receiver 100. Similarly, a user can be assigned to each of a plurality of memory areas in an NVRAM 208 in each of television receivers 200 and 300.

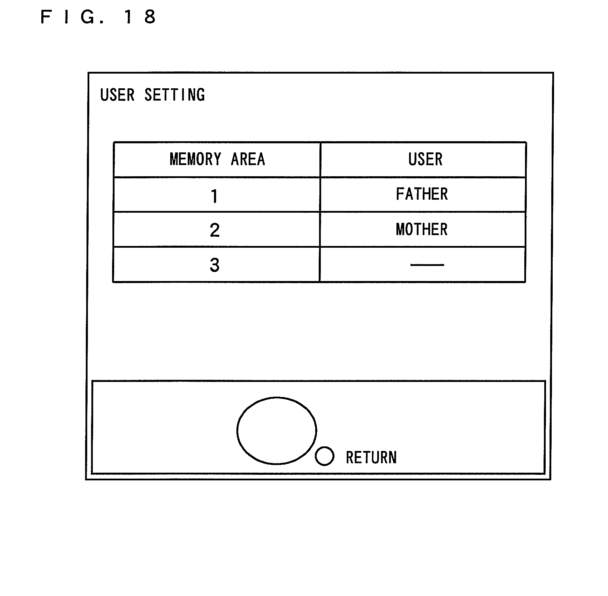

Fig. 18 is a diagram showing an example of a user setting screen in the fifth embodiment. A user can be assigned to each of the plurality of memory areas in the NVRAM 108 or 208 by operating the remote control 110. For example, "father" is set as the user in the memory area "1" in the NVRAM 108 in the television receiver 100, and "mother" is assigned as the user in the memory area "2". Information related to the user assigned to each of the plurality of memory areas in the NVRAM 108 is stored as memory area information in the NVRAM 108.

Data use flags are respectively set in the plurality of memory areas in the NVRAM 108. Each of the data use flags is set to ON when the corresponding memory area is used for reproducing data broadcasting.

Similarly, the user can be assigned to each of the plurality of memory areas in the NVRAM 208 in the data transmitter/receiver 222 in each of the video recording devices 200 and 300 by operating the remote control 210. Information related to the user assigned to each of the plurality of memory areas is stored as memory area information in the NVRAM 208. Further, data use flags are respectively set in the plurality of memory areas in the NVRAM 208.

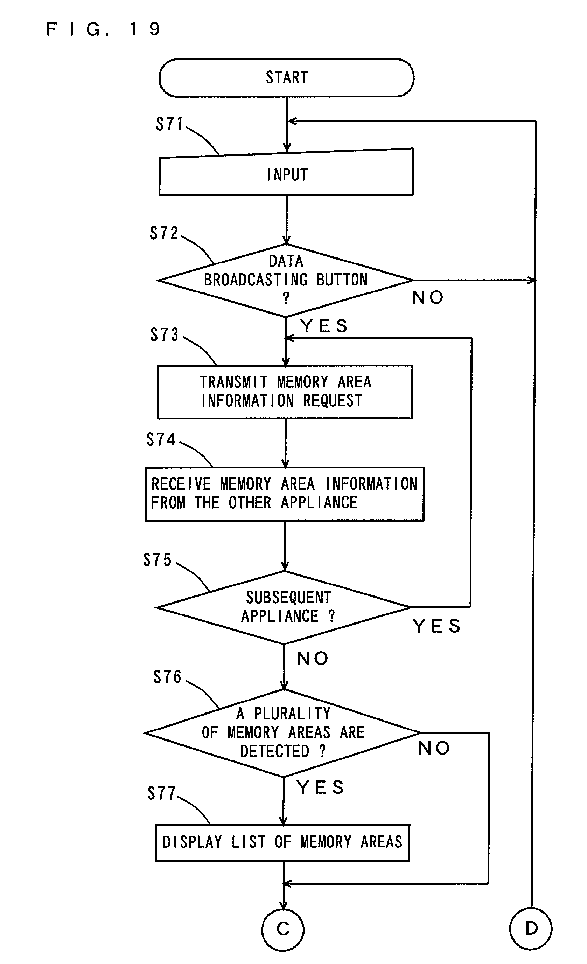

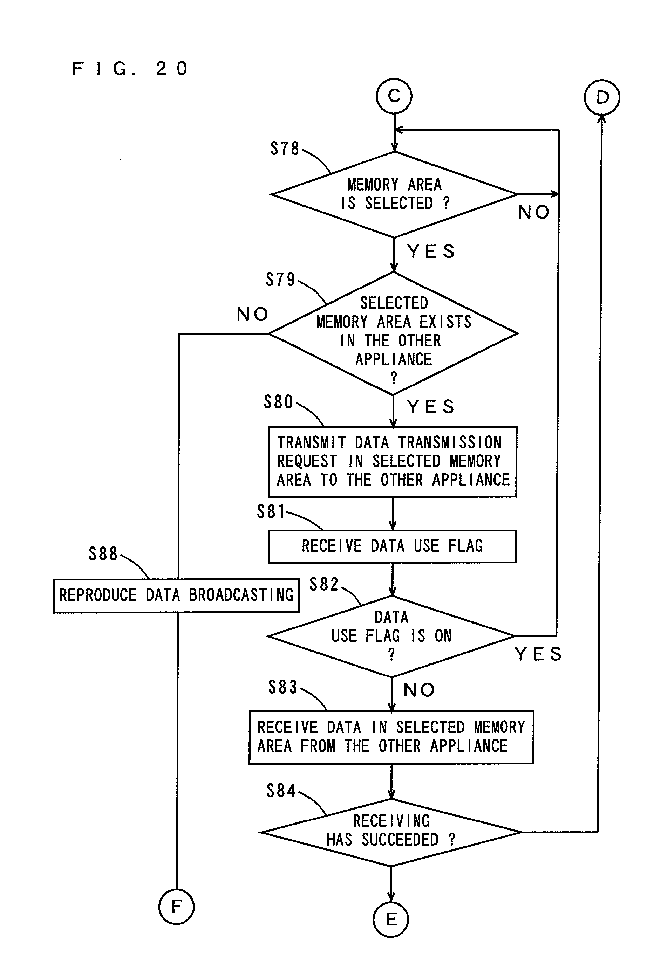

Figs. 19 and 20 are flow charts showing the operation of the data transmitter/receiver 222 in the fifth embodiment.

A signal representing the operation of the remote control 210 is inputted to a CPU 204 through a remote control light receiver 209 (step S71). The CPU 204 determines whether or not a data broadcasting button is pressed on the basis of the inputted signal (step S72).

In a case where the data broadcasting button is pressed, the data transmitter/receiver 222 transmits a memory area information request to another appliance through the communication unit 207 (step S73).

The data transmitter/receiver 222 then receives memory area information from the other appliance through the communication unit 207 (step S74). Further, the data transmitter/receiver 222 determines whether or not the subsequent appliance exists (step S75), and the steps S73 and S74 are repeated with respect to all other appliances.

Thereafter, the data transmitter/receiver 222 determines whether or not a plurality of memory areas are detected (step S76). In a case where the plurality of memory areas are detected, the data transmitter/receiver 222 displays a list of memory areas on a display 111 in the television receiver 100 (step S77).

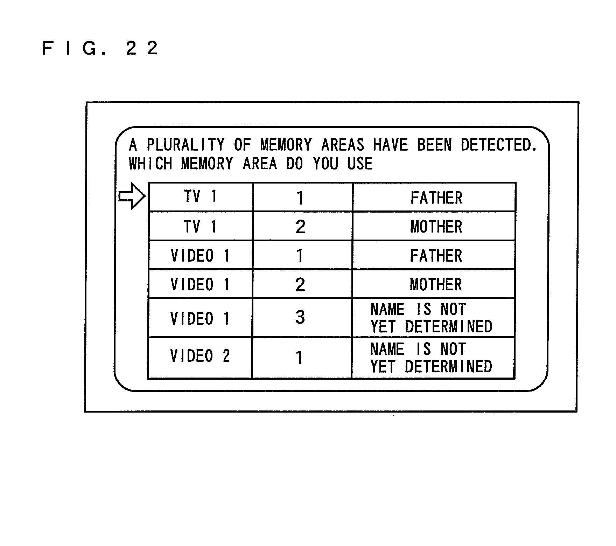

Fig. 22 is a diagram showing an example of the list of memory areas. In the example shown in Fig. 22, "father" is assigned to the memory area "1" in the NVRAM 108 in the television receiver 100 and the memory area "1" in the NVRAM 208 in the video recording device 200, and "mother" is assigned to the memory area "2" in the NVRAM 108 in the television receiver 100 and the memory area "2" in the NVRAM 200 in the video recording device 200.

The user can select the memory area employed for reproducing data broadcasting in the list of memory areas displayed on the display 111 by operating the remote control 210.

The data transmitter/receiver 222 then determines whether or not the memory area in the list of memory areas is selected (step S78). In a case where the memory area is selected, the

data transmitter/receiver 222 determines whether the selected memory area exists in the other appliance (step S79).

In a case where the selected memory area exists in the other appliance, the data transmitter/receiver 222 transmits a data transmission request in the selected memory area to the other appliance through the communication unit 207 (step S80). Further, the data transmitter/receiver 222 receives a data use flag corresponding to the selected memory area through the communication unit 207 (step S81).

The data transmitter/receiver 222 then determines whether or not the received data use flag is ON (step S82). In a case where the data use flag is OFF, the data transmitter/receiver 222receivesdata broadcasting-related datain the selected memory area from the other appliance through the communication unit 207 (step S83).

The data transmitter/receiver 222 determines whether or not the receiving of the data broadcasting-related data has succeeded (step S84). In a case where the receiving of the data broadcasting-related data has succeeded, the data transmitter/receiver 222 stores the data broadcasting-related data received from the other appliance in the NVRAM 208, and instructs a tuner 202 and an image processor 203 to reproduce data broadcasting (step S85). Thus, the tuner 202 and the image processor 203 reproduce the data broadcasting on the basis of the data broadcasting-related data stored in the NVRAM 208, and displays the data broadcasting on the display 111. In this case, data broadcasting-related data stored in a RAM 206 is updated as the data broadcasting is reproduced.

Thereafter, the data transmitter/receiver 222 determines whether or not the reproduction of the data broadcasting is terminated (step S86). In a case where the reproduction of the data broadcasting is not terminated, the procedure is returned to the step S85.

In a case where the reproduction of the data broadcasting is terminated, the data transmitter/receiver 222 transmits the updated data broadcasting-related data to the other appliance through the communication unit 207 (step S87).

In a case where the memory area selected in the step S79 exists in the appliance (the video recording device 200), the data transmitter/receiver 222 instructs the tuner 202 and the image processor 203 to reproduce the data broadcasting (step S88). Thus, the tuner 202 and the image processor 203 reproduce the data broadcasting on the basis of the data broadcasting-related data in the NVRAM 208, to display the data broadcasting on the display 111. In this case, the data broadcasting-related data in the NVRAM 208 is updated as the data broadcasting is reproduced.

In a case where the data broadcasting button is not pressed in the step S72 or a case where the receiving of the data broadcasting-related data has not succeeded in the step S84, the procedure is returned to the step S71.

The operation of the data transmitter/receiver 122 in the television receiver 100 shown in Fig. 13 is the same as the operation of the data transmitter/receiver 222 in the video recording device 200.

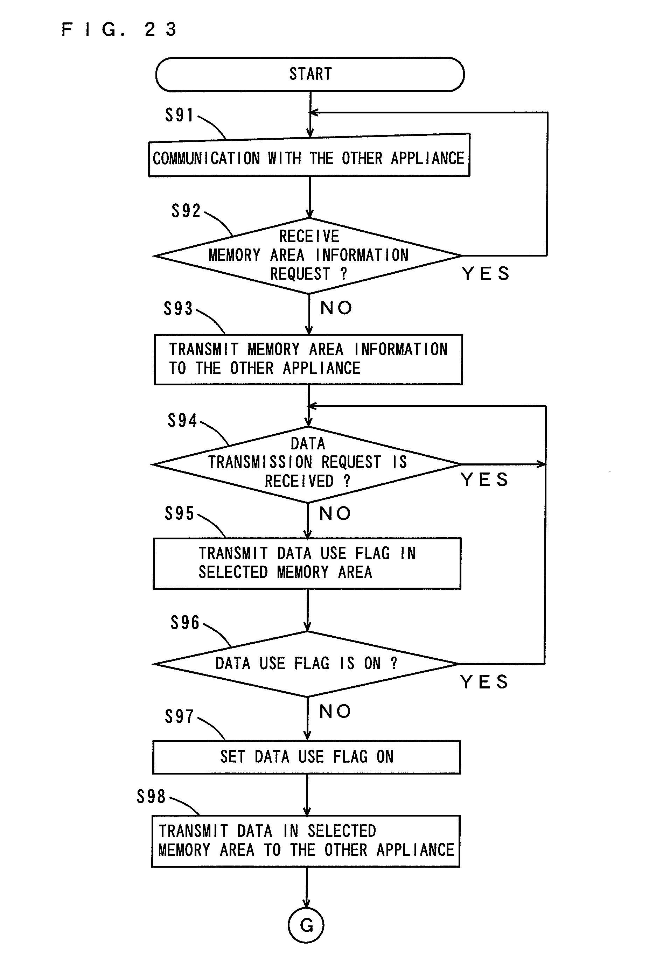

Fig. 23 is a flow chart showing the operation of the data transmitter/receiver 122 in the television receiver 100 in the fifth embodiment.

The data transmitter/receiver 122 communicates with the other appliance through a communication unit 107 (step S91), and determines whether or not a memory area information transmission request is received from the other appliance (step S92).

In a case where the memory area information transmission request is received from the other appliance, the data transmitter/receiver 122 transmits the memory area information to the other appliance through the communication unit 107 (step S93).

The data transmitter/receiver 122 then determines whether or not a data transmission request is received from the other appliance (step S94).

In a case where the data transmission request is received from the other appliance, the data transmitter/receiver 122 transmits the selected data use flag to the other appliance through the communication unit 107 (step S95). In this example, the data transmitter/receiver 122 transmits the data use flag to the video recording device 200.

It is determined whether or not the data use flag is ON (step S96). In a case where the data use flag is OFF, the data use flag is set to ON (step S97).

The data transmitter/receiver 122 then transmits data broadcasting-related data in the selected memory area in the NVRAM 108 to the other appliance through the communication unit 107 (step S98). In this example, the data transmitter/receiver 122 transmits the data broadcasting-related data in the selected memory area in the NVRAM 208 to the video recording device 200. Thereafter, the data transmitter/receiver 122 waits until the updated data broadcasting-related data is received from the other appliance through the communication unit 107 (step S99).

The data transmitter/receiver 122 writes, when it receives the updated data broadcasting-related data from the other appliance through the communication unit 107, the received data broadcasting-related data into the selected memory area in the NVRAM 108 (step S100). In this example, the data transmitter/receiver 122 receives the updated data broadcasting from the video recording device 200. Finally, the data transmitter/receiver 122 sets the data use flag in the selected memory area to OFF (step S101).

In a case where the memory information transmission request is not received in the step S92, the procedure is returned to the step S91. In a case where the data use flag is ON in the step S96, the procedure is returned to the step S94.

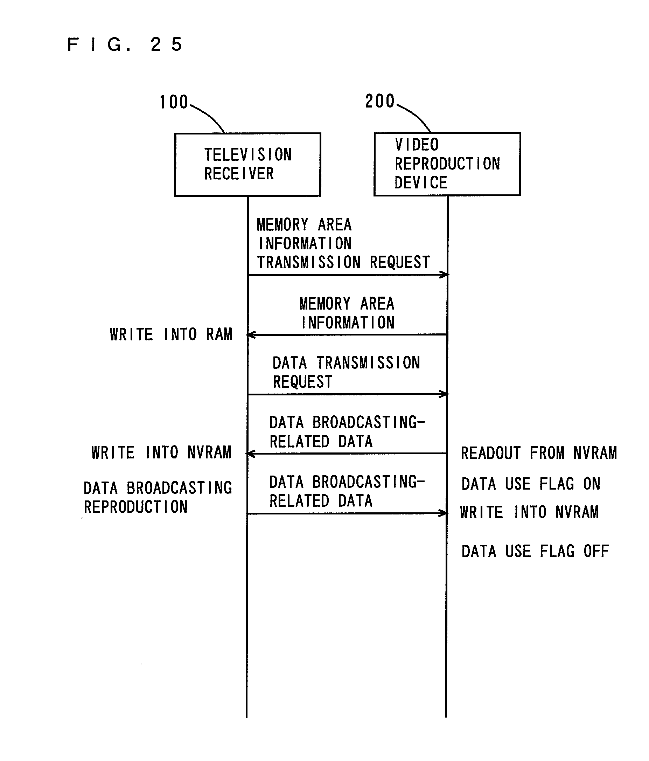

Fig. 25 is a sequence diagram showing the schematic flow of an operation for reproducing data broadcasting in the fifth embodiment. In the example shown in Fig. 25, description is made of a case where an instruction to reproduce data broadcasting is given by operating the remote control 110 in the television receiver 100. Here, only the operations of the television receiver 100 and the video recording device 200 are illustrated.

First, the television receiver 100 transmits a memory area information transmission request to the video recording device 200. Thus, the video recording device 200 transmits memory area information to the television receiver 100. The television receiver 100 writes the received memory area information into the RAM 106, and displays a list of memory areas on the display 111.

Thereafter, the television receiver 100 transmits a data transmission request for requesting to transmit data broadcasting-related data in the selected memory area to the video recording device 200. Thus, the video recording device 200 reads out the data broadcasting-related data in the selected memory area from the NVRAM 208, and transmits the read data broadcasting-related data to the television receiver 100. The video recording device 200 sets a data use flag corresponding to the selected memory area to ON. Thus, the other appliance is prevented from using the data broadcasting-related data in the memory area.

The television receiver 100 writes the received data broadcasting-related data into the NVRAM 108. The television receiver 100 reproduces the data broadcasting using the data broadcasting-related data written into the NVRAM 108. Thus, the data broadcasting-related data in the NVRAM 108 is updated.

After the reproduction of the data broadcasting is terminated, the television receiver 100 transmits the updated data broadcasting-related data to the video recording device 200. Thus, the video recording device 200 writes the received data broadcasting-related data in the selected memory area in the NVRAM 208. The video recording device 200 sets the data use flag corresponding to the selected memory area to OFF.

In a case where the user thus gives an instruction to reproduce data broadcasting, the list of memory areas shown in Fig. 22 is displayed, and the data broadcasting is reproduced using data broadcasting-related data in a memory area in a selected data broadcasting acquisition appliance. Consequently,the data broadcasting is prevented frombeing reproduced using an appliance that is not intended by the user.

In a case where the relationship between the memory area in each of the NVRAMs 108 and 208 in the plurality of appliances and the user is uniquely determined, the list of memory areas shown in Fig. 22 may not be displayed. In this case, in order to recognize a user of the current appliance, a user specifying message for specifying the user of the appliance is displayed on the display 111 when the appliance is started.

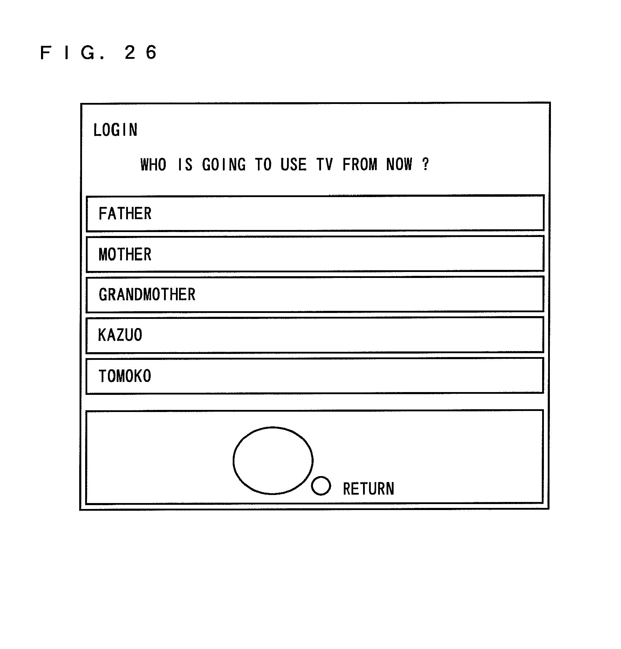

Fig. 26 is a diagram showing an example of the user specifying message in the fifth embodiment.

In the example shown in Fig. 26, the current user can be specified from users previously registered by operating the remote control 110 when the television receiver 100 is started. In a case where the user specified by the user specifying message gives an instruction to reproduce data broadcasting, the memory area in the appliance corresponding to the user is automatically selected, and the data broadcasting-related data in the memory area is used for reproducing the data broadcasting.

### (6) Correspondences between elements in claims and units in embodiments

In the embodiments described above, the tuners 102 and 202 correspond to a receiver, the tuners 102 and 202, the tuners 102 and 202, and the image processors 103 and 203 correspond to a reproducer, and the NVRAMs 108 and 208 correspond to a storage.

The remote controls 110 and 210 correspond to a setter, an instruction device, and a selector, the data transmitters/receivers 122 and 204, the data broadcasting reproduction disablers 120 and 220, the data broadcasting switchers 121 and 221, or the data transmitters/receivers 122 and 222 correspond to a controller, the display 111 corresponds to a notification unit, a confirmation unit, a presentation unit, or a display.

Furthermore, the memory area corresponds to a storage area, and the data related to data broadcasting corresponds to data broadcasting-related data.

### (7) Other Embodiments

As a receiver, the tuners 102 and 202 may be replaced with other receiving circuits such as an external tuner.

As a reproducer, the tuners 102 and 202 and the image processors 103 and 203 may be replaced with other reproduction circuits such as an external tuner.

As a storage, the NVRAMs 108 and 208 may be replaced with other recording media such as a hard disk, a flexible disk, a compact disc, a magneto-optical disc, a memory card, and other memories.

The remote controls 110 and 210 serving as a setter, an instruction device, and a selector may be replaced with other input devices such as various switches, a mouse, and a keyboard provided in the television receiver 100 and the video recording devices 200 and 300.

Although in the embodiments described above, the data broadcasting reproduction disablers 120 and 220, the data broadcasting switchers 121 and 221, and data transmitters/receivers 122 and 222, the data transmitters/receivers 122 and 204 are realized by the data transmitters/receivers 122 and 204 and a television broadcasting receiving program, the controller may be realized by other electronic circuits such as a logical circuit.

Various types of display devices such as a CRT (Cathode-Ray Tube), a liquid crystal display panel, and a plasma display panel can be used as a notification unit, a confirmation unit, a presentation unit, or a display. An audio output device or the like may be used as a notification unit, a confirmation unit, or a presentation unit.

Although in the above-mentioned embodiment, the television receiver 100 and the video recording devices 200 and 300 are used as the television broadcasting receiving device, various types of television broadcasting receiving devices having a digital broadcasting receiving function can be used.

Since the plurality of television broadcasting receiving devices are connected to one another by a communication line, theymay be installed in the same place, maybe installed in separate rooms, or may be installed in places remote from one another. Alternatively, at least one of the plurality of television broadcasting receiving devices may be installed in a movable member.

For communication among the plurality of television broadcastingreceivingdevices, Ethernet (Trade Mark) maybe used, infrared rays may be used, or serial cables may be used. If any data communication is possible among the plurality of television broadcasting receiving devices, various types of communication methods can be used.

Although in the above-mentioned embodiment, the ROMs 105 and 205 are used as recording media for recording the television broadcasting receiving program, the present invention is not limited to the same. For example, another semiconductor memory may be used as the recording medium.

Furthermore,the television broadcasting receiving device may have a configuration in which the CPUs 104 and 204 access and execute the television broadcasting receiving program recorded on the recording medium. Alternatively, the television broadcasting receiving device may read out the television broadcasting receiving program from the recording medium, downloads the read television broadcasting receiving program in a program storage area (not shown), and executes the television broadcasting receiving program. In this case, a program for downloading is previously stored in the television broadcasting receiving device.

Here, the recording medium may be recording media constructed so as to be separable from the television broadcasting receiving device, or may be media for fixedly holding a program, for example, tapes such as a magnetic tape and a cassette tape, magnetic disks such as a flexible disk and a hard disk, optical discs such as CD (Compact Disc)-ROM(Read-Only Memory)/MO (Magneto-optical Disc), MD (Mini Disc), and DVD (Digital Versatile Disc), cards such as an IC (Integrated Circuit) card, a memory card, and an optical card, or semiconductor memories such as mask ROM, EPROM (Erasable Programmable Read-Only Memory), EEPROM (Electrically Erasable and Programmable Read-Only Memory), and flash ROM.

A program reading device may be provided as the external storage device, and a recording medium such as a flexible disk, a compact disc, a magneto-optical disc, or a memory card may be inserted into the reading device as a recording medium.

Since the television broadcasting receiving device according to the present invention can be connected to a communication network such as Internet to constitute a system, a recording medium for holding a television broadcasting receiving program in such a manner that the storage contents are not fixed may be used so as to download the television broadcasting receiving program from the communication network.

In a case where the television broadcasting receiving program is thus downloaded from the communication network, a program for the downloading may be previously stored in the television broadcasting receiving device, or may be installed from another recording medium. Not only the television broadcasting receiving program but also data may be recorded on the recording medium.

### [Industrial Applicability]

The present invention is applicable to receiving and reproduction of television broadcasting and data broadcasting, for example.

## Claims

1. A television broadcasting receiving device comprising:
a receiver that receives television broadcasting and data broadcasting;
a reproducer that reproduces the television broadcasting or the data broadcasting received by said receiver;
a storage that stores data generated and updated when said data broadcasting is reproduced;
a setter for setting the reproduction of said data broadcasting to permission and inhibition; and
a controller that disables, when the reproduction of said data broadcasting is set to inhibition using said setter, the reproduction of the data broadcasting by said reproducer.

2. The television broadcasting receiving device according to claim 1, further comprising
an instruction device that gives an instruction to reproduce the data broadcasting by said reproducer, and
a notification unit that notifies, when the reproduction of said data broadcasting is set to inhibition using said setter, a user that the reproduction of the data broadcasting is set to inhibition in response to the instruction to reproduce the data broadcasting by said instruction device.

3. The television broadcasting receiving device according to claim 2, wherein said notification unit includes a display that indicates that the reproduction of the data broadcasting is set to inhibition.

4. A television broadcasting receiving device comprising:
a receiver that receives television broadcasting and data broadcasting;
a reproducer that reproduces the television broadcasting or the data broadcasting received by said receiver;
an instruction device that gives an instruction to reproduce the data broadcasting by said reproducer,
a storage that stores data generated and updated when said data broadcasting is reproduced; and
a confirmation unit that makes a user confirm whether or not the data broadcasting is to be reproduced in response to the instruction to reproduce the data broadcasting bysaidinstruction device.

5. The television broadcasting receiving device according to claim 4, further comprising a controller that controls said reproducer such that the data broadcasting is not reproduced when the user gives the instruction not to reproduce the data broadcasting in response to the confirmation by said confirmation unit, while being reproduced when the user gives the instruction to reproduce the data broadcasting in response to the confirmation by said confirmation unit.

6. The television broadcasting receiving device according to claim 4, wherein said confirmation unit includes a display that displays an inquiry as to whether or not the data broadcasting is to be reproduced in response to the instruction to reproduce the data broadcasting by said instruction device.

7. A television broadcasting receiving device that can be connected to another one or a plurality of appliances, comprising:
a receiver that receives television broadcasting and data broadcasting;
a reproducer that reproduces the television broadcasting or the data broadcasting received by said receiver;
a storage that stores data generated and updated when said data broadcasting is reproduced;
a setter for setting an appliance for reproducing the data broadcasting;
an instruction device that gives an instruction to reproduce the data broadcasting by said reproducer; and
a controller that transmits a request to reproduce the data broadcasting to the appliance set using said setter in response to the instruction to reproduce the data broadcasting by said instruction device.

8. The television broadcasting receiving device according to claim 7, wherein said controller instructs, when it receives the request to reproduce the data broadcasting from another appliance, said reproducer to reproduce the data broadcasting.

9. A television broadcasting receiving device that can be connected to another one or a plurality of appliances, comprising:
a receiver that receives television broadcasting and data broadcasting;
a reproducer that reproduces the television broadcasting or the data broadcasting received by said receiver;
a storage that stores data generated and updated when said data broadcasting is reproduced;
a setter for setting an appliance for acquiring data related to the data broadcasting;
an instruction device that gives an instruction to reproduce the data broadcasting by said reproducer; and
a controller that transmits a request to reproduce the data related to the data broadcasting to the appliance set using said setter in response to the instruction to reproduce the data broadcasting by said instruction device.

10. The television broadcasting receiving device according to claim 9, wherein said controller writes, when it receives the data related to the data broadcasting from said other appliance in response to the request to transmit said data, the received data into said storage.

11. The television broadcasting receiving device according to claim 9, wherein said controller transmits, when it receives the request to transmit the data related to the data broadcasting from the other appliance, the data stored in said storage to said other appliance.

12. The television broadcasting receiving device according to claim 11, wherein said controller sets, when it receives the data stored in said storage to said other appliance in response to the request to transmit the data from said other appliance, said storage to unusability.

13. The television broadcasting receiving device according to claim 12, wherein said controller writes, when it receives the data from said other appliance after transmitting the data to said other appliance, the received data into said storage, and sets said storage to usability.

14. A television broadcasting receiving device that can be connected to another one or a plurality of appliances, comprising:
a receiver that receives television broadcasting and data broadcasting;
a reproducer that reproduces the television broadcasting or the data broadcasting received by said receiver;
a storage that stores data generated and updated when said data broadcasting is reproduced;
an instruction device that gives an instruction to reproduce the data broadcasting by said reproducer; and
a presentation unit that presents to a user information related to said storage and information related to storages in said other one or plurality of appliances in response to the instruction to reproduce the data broadcasting by said instruction device.

15. The television broadcasting receiving device according to claim 14, wherein
said storage has one or a plurality of storage areas, and said storage in each of said other one or plurality of appliances has one or a plurality of storage areas, and
said television broadcasting receiving device further comprising an operation unit that respectively assigns users to the one or plurality of storage areas in said storage and said one or plurality of storage areas in each of said other one or plurality of appliances,
said presentation unit presenting information related to the users respectively assigned to said one or plurality of storage areas in said storage and said one or plurality of storage areas in each of said other one or plurality of appliances.

16. The television broadcasting receiving device according to claim 15, further comprising
a selector that selects any one of said one or plurality of storage areas and said one or plurality of storage areas in each of said other one or plurality of appliances on the basis of the information related to the users presented by said presentation unit, and
a controller that transmits, when said selector selects the storage area in the other appliance, a request to transmit the data related to the data broadcasting to the selected other appliance.

17. The television broadcasting receiving device according to claim 16, wherein said controller writes, when it receives the data related to the data broadcasting from said other appliance in response to the request to transmit said data, the received data into said storage.

18. The television broadcasting receiving device according to claim 16, wherein said controller transmits, when it receives the request to transmit the data related to the data broadcasting from the other appliance, the data in said selected storage area in said storage to said other appliance.

19. The television broadcasting receiving device according to claim 18, wherein said controller sets, when it transmits the data in said selected storage area in said storage to said other appliance in response to the request to transmit the data from said other appliance, said storage area to unusability.

20. The television broadcasting receiving device according to claim 19, wherein said controller writes, when it receives the data from said other appliance after transmitting the data to said other appliance, the received data into said selected storage area in said storage, and sets said storage area to usability.

21. A television broadcasting receiving method comprising the steps of:
receiving television broadcasting and data broadcasting;
reproducing the received television broadcasting or data broadcasting;
storing data generated and updated when the data broadcasting is reproduced;
setting the reproduction of the data broadcasting to permission and inhibition; and
disabling the reproduction of the data broadcasting when the reproduction of the data broadcasting is set to inhibition.

22. A television broadcasting receiving method comprising the steps of:
receiving television broadcasting and data broadcasting;
reproducing the received television broadcasting or data broadcasting;
giving an instruction to reproduce the data broadcasting;
storing data generated and updated when the data broadcasting is reproduced; and
making a user confirm whether or not the data broadcasting is to be reproduced in response to the instruction to reproduce the data broadcasting.

23. A television broadcasting receiving method comprising the steps of:
receiving television broadcasting and data broadcasting;
reproducing the received television broadcasting or data broadcasting;
storing data generated and updated when the data broadcasting is reproduced;
setting an appliance for reproducing the data broadcasting;
giving an instruction to reproduce the data broadcasting; and
transmitting a request to reproduce the data broadcasting to the appliance set in response to the instruction to reproduce the data broadcasting.

24. A television broadcasting receiving method comprising the steps of:
receiving television broadcasting and data broadcasting;
reproducing the received television broadcasting or data broadcasting;
storing data generated and updated when the data broadcasting is reproduced;
setting an appliance for acquiring data related to the data broadcasting;
giving an instruction to reproduce the data broadcasting; and
transmitting a request to transmit the data related to the data broadcasting to the appliance set in response to the instruction to reproduce the data broadcasting.

25. A television broadcasting receiving method comprising the steps of:
receiving television broadcasting and data broadcasting;
reproducing the received television broadcasting or data broadcasting;
storing in a storage data generated and updated when the data broadcasting is reproduced;
giving an instruction to reproduce the data broadcasting; and
presenting to a user information related to said storage and information related to storages in said other one or plurality of appliances in response to the instruction to reproduce the data broadcasting.

26. A television broadcasting receiving program that can be executed by a computer, for causing the computer to perform processing of:
receiving television broadcasting and data broadcasting;
reproducing the received television broadcasting or data broadcasting;
storing data generated and updated when the data broadcasting is reproduced;
setting the reproduction of the data broadcasting to permission and inhibition; and
disabling, when the reproduction of the data broadcasting is set to inhibition, the reproduction of the data broadcasting.

27. A television broadcasting receiving program that can be executed by a computer, for causing the computer to perform processing of:
receiving television broadcasting and data broadcasting;
reproducing the received television broadcasting or data broadcasting;
giving an instruction to reproduce the data broadcasting;
storing data generated and updated when the data broadcasting is reproduced; and
making a user confirm whether or not the data broadcasting is to be reproduced in response to the instruction to reproduce the data broadcasting.

28. A television broadcasting receiving program that can be executed by a computer, for causing the computer to perform processing of:
receiving television broadcasting and data broadcasting;
reproducing the received television broadcasting or data broadcasting;
storing data generated and updated when the data broadcasting is reproduced;
setting an appliance for reproducing the data broadcasting;
giving an instruction to reproduce the data broadcasting; and
transmitting a request to reproduce the data broadcasting to the appliance set in response to the instruction to reproduce the data broadcasting.

29. A television broadcasting receiving program that can be executed by a computer, for causing the computer to perform processing of:
receiving television broadcasting and data broadcasting;
reproducing the received television broadcasting or data broadcasting;
storing data generated and updated when the data broadcasting is reproduced;
setting an appliance for acquiring data related to the data broadcasting;
giving an instruction to reproduce the data broadcasting; and
transmitting a request to transmit the data related to the data broadcasting to the appliance set in response to the instruction to reproduce the data broadcasting.

30. A television broadcasting receiving program that can be executed by a computer, for causing the computer to perform processing of:
receiving television broadcasting and data broadcasting;
reproducing the received television broadcasting or data broadcasting;
storing in a storage data generated and updated when the data broadcasting is reproduced;
giving an instruction to reproduce the data broadcasting; and
presenting to a user information related to said storage and information related to storages in said other one or plurality of appliances in response to the instruction to reproduce the data broadcasting.
